# EUROPEAN PATENT APPLICATION

(11) **EP 1 075 148 A2**
(43) Date of publication of application: **07.02.2001**
(21) Application number: 00202719.1
(22) Date of filing: 31.07.2000
(51) Int. Cl.: H04N 7/50, H04N 7/36, H04N 7/64

(54) **Error resistant video coding using reversible variable length codes (RVLCs)**

(30) Priority: 02.08.1999 US 146888 P
(71) Applicant: Texas Instruments Incorporated, Dallas, Texas 75251 (US)
(72) Inventor: Iyoh, Yuji, Tsukuba, Ibaraki 300-2645 (JP)
(74) Representative: Holt, Michael

(57) **Abstract**

Motion compensated video encoding and decoding with motion vectors encoded with a reversible coarse code interleaved with an additional code, the coarse code occupying the even numbered bits and the additional code the odd-numbered bits of a codeword. Preferred embodiments include motion vector data partitioned from texture data and with motion vectors differentially encoded by use of an immediately preceding motion vector as a predictor.

## Description

### FIELD OF THE INVENTION

The present application relates generally to the field of information encoding for transmission over noisy channels and storage, and more particularly to error resilient encoding.

### BACKGROUND TO THE INVENTION

Two common approaches to the mitigation of errors arising during the transmission of data over noisy channels exist: Automatic Retransmission Request (ARQ) and Forward Error Correction (FEC). ARQ type of mitigation typically would not be feasible in multicast or real-time applications such as video because of intolerable time delays or a lack of feedback channel. In such cases, a decoder can only decode the error corrupted bitstream, protected to an extent by error correction encoding, and must create from such bitstream. FEC provides mitigation by error correcting codes (e.g., Reed-Solomon). However, uncorrectable errors require further mitigated approaches.

In general, commonly used video compression methods have block-based motion compensation to remove temporal redundancy. Motion compensation methods encode only (macro)block motion vectors and the corresponding quantized residuals (texture); and variable length coding (VLC) of the motion vectors and residual increases coding efficiency. However, variable length coding often are highly susceptible to transmission channel errors and a decoder easily loses synchronization with the encoder when uncorrectable errors arise. The predictive coding methods, such as motion compensation, make matters much worse because the errors in one video frame quickly propagate across the entire video sequence and rapidly degrade the decoded video quality.

The typical approach of such block-based video compression methods to uncorrectable errors includes the steps of error detection (e.g., out-of-range motion vectors, invalid VLC table entry, or invalid number of residuals in a block), resynchronization of the decoder with the encoder, and error concealment by repetition of previously transmitted correct data in place of the uncorrectable data. For example, video compressed using MPEG1-2 has a resynchronization marker (start code) at the start of each slice of macroblocks (MBs) of a frame, and an uncorrectable error results in all of the data between correctly decoded resynchronization markers being discarded. This implies degradation in quality of the video stream, especially for predictive compression methods such as MPEG.

This compressed video is typically coded using Variable Length Code (VLC) tables such as Huffman codes. When the compressed video data is transmitted over noisy communication channels, it is corrupted by channel errors. VLC tables prove to be particularly sensitive to bit errors. This is because bit errors can make one codeword be incorrectly interpreted to be another codeword of a different length and hence the error is not detected. This makes the decoder lose synchronization with the encoder. Although the error may finally be detected due to an invalid VLC table entry, usually the location in the bitstream where the error is detected is not the same as the location where the error occurred. Hence, when the decoder detects an error, it has to seek the next resynchronization marker and discard all the data between this and the previous resynchronization marker. Thus, even a single bit error can sometimes result in a loss of a significant amount of data, and this is a problem of the known coding schemes.

Golomb-Rice codes (S.W.Golomb, "Run-length encodings," IEEE Trans. Inf. Theory, vol. IT-12, pp.399-401, July 1966 and R.F.Rice, "some practical universal noiseless coding techniques," Tech. Rep. JPL-79-22, Jet Propulsion Laboratory, Pasadena, CA, march 1979) have been applied to lossless image compression; see M.J.Weinberger, G.Seroussi, and G.Sapiro, "LOCO-I: A low complexity, context based lossless image compression algorithm," Proc 1996 IEEE Data Comp. Conf., Snowbird, UT, pp.140-149, April, 1996.

These video compression and decompression methods may be implemented on special integrated circuits or on programmable digital signal processors or microprocessors.

### SUMMARY OF THE INVENTION

The present invention uses reversible variable length codes (RVLC) to encode motion vectors to help alleviate the error problems in motion compensated compressed video such as MPEG. These RVLC have an interleaved structure of a coarse code (indicating a range of values) and additional bits (indicating a value with the range of values); the coarse code provides the reversibility.

Preferred embodiments include data partitioning with a resynchronization word between motion vector data and texture (residual) data for the macroblocks in a data packet; this permits simple differential motion vector encoding by using the immediately prior motion vector as a predictor.

This has the advantage of better performance.

### BRIEF DESCRIPTION OF THE DRAWINGS

The present invention will now be further described with reference to the accompanying drawings, which show illustrative embodiments of the invention:
Figures 1-4 shows error detection with reversible coding.
Figure 5 is a fixed length code table.
Figures 6a-c shows a bitstream syntax for data partitioning.
Figure 7 shows a bitstream syntax for data and header partitioning.
Figures 8-9 shows an alternative bitstream syntax.
Figure 10 illustrates motion vector coding.
Figure 11 shows motion vector prediction.

### DESCRIPTION OF THE PREFERRED EMBODIMENTS

### Data partitioning

Enhanced error concealment properties for motion compensated compression, such as MPEG, can be achieved by using data partitioning. Consider a "video packet" to consist of the data between two consecutive resynchronization markers. In a data partitioning approach, the motion data and the texture (DCT) data within each of the video packets are separately encoded in the bitstream. Another resynchronization word (Motion Resync. Word) is imbedded between the motion data and the DCT data to signal the end of the motion data and the beginning of the DCT data. This data partitioning allows the decoder to use the motion data even if the DCT data is corrupted by undetectable errors. This provides advantages including partial recovery over uncorrectable error in a packet of compressed video data with little additional overhead. The error concealment that is made possible by the use of motion compensation by applying decoded motion vectors results in a much better decoded video quality. Arid this extends to object based compression in that object shape data can be separated from the motion data and texture data by a shape resynchronization word.

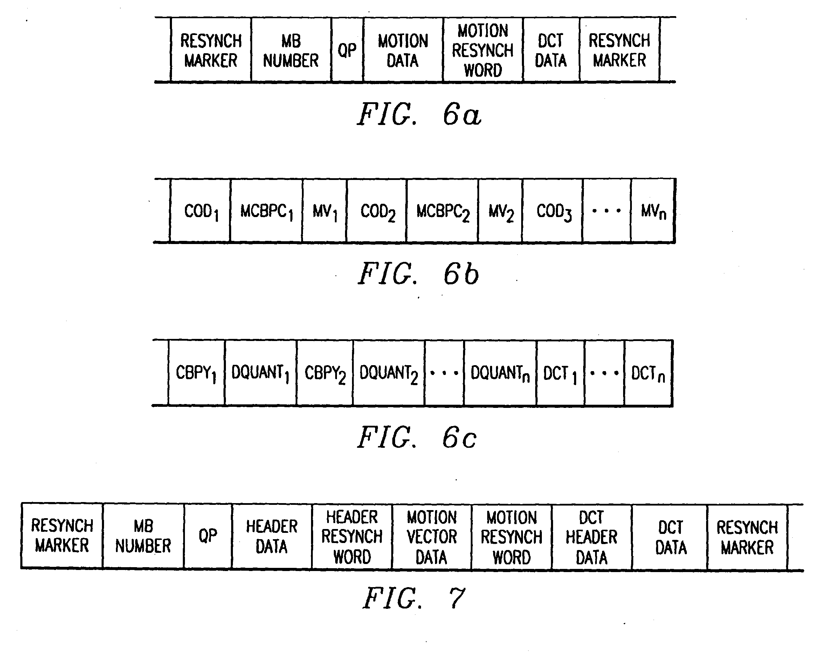

When using data partitioning the data within the video packet is organized to look as shown in Figures 6a-c: Figure 6a shows the fields between two resynchronization markers and Figures 6b-c illustrate the motion data field and the texture data field in more detail by an example. In particular, the first field ("Resynch Marker") is a resynchronization marker, the second field ("MB No.") is the the number in the frame of the first macroblock (16 x 16 block of pixels) in the video packet, the third field ("QP") is the default quantization parameter used to quantize the texture data (DCT coefficients) in the video packet, the fourth field ("Motion Data") is the motion data, the fifth field ("Motion Resynch Word") is the resynchronization marker between the motion data and the texture data, the sixth field ("DCT Data") is the texture data, and the last field ("Resynch Marker") is the ending resynchronization marker. Note that the resynchronization marker is taken to have 23 successive 0s, and that these resynchronization words can be created by a search process as described in copending US patent application serial no. 09/019,787, filed 02/06/98.

Figure 6b shows the motion data field consisting of a COD field, an MCBPC field, and an MV field for each the macroblocks in the packet. The COD field indicates whether the macroblock is coded or skipped (COD = 0 macroblock is coded, COD = 1 macroblock is skipped). The MCBPC field indicates (1) the mode of the macroblock (and (2) which of the chrominance blocks in the macroblock are coded and which are skipped: the mode indicates whether there the current macroblock is coded INTRA (no motion compensation), INTER (motion compensated with one 16 x 16 motion vector), or INTER4V (motion compensated with four 8 x 8 motion vectors). Of course, if COD indicates the macroblock is not coded, then the MCBPC field is not present. The MV field is the actual motion vector data; either one vector or four vectors. Again, if COD indicates that the macroblock is not coded, then the MV field is not present.

Figure 6c shows the texture (DCT Data) field as consisting of a CBPY field and a DQUANT field for each of the macroblocks followed by the DCT data for each of the macroblocks. The CBPY field indicates which of the luminance blocks of the macroblock are coded and which are skipped. The DQUANT field indicates the differential increment to the default quantizer value (QP) to compute the quantization value for the macroblock. The DCT fields are the run length encoded quantized DCT coefficient values of the macroblock.

### Reversible VLC with header

The preferred embodiment syntax of the bitstream within a video packet with headers and data using RVLC is shownb in Figure 7. The Resynch Marker, MB No., QP, and Motion Resynchr Word fields are as in Figure 6a; the Motion Vector Data field consists of the motion vector data MV1, MV2, ... MVn as in Figure 6b; the DCT Header Data field consists of the CBPY1, DQUANT1, ..., CBPYn, DQUANTn of Figure 6c; and the DCT Data field consists of the DCT1, DCT2, ..., DCTn also of Figure 6c.

The Header Data field consists of one RVLC entry for the combined COD and MCBPC data for each macroblock (see Figure 6b), and the Header Resynchronization Word is a uniquely decoded word similar to the Motion Resynchronization Word. Thus sequences of RVLC entries occur in the Header Data, Motion Vector Data, DCT Header Data, and DCT Data fields; of course each field has its own RVLC table as detailed below.

If an error is detected by the decoder while decoding any of the RVLCs, the decoder seeks the next resynchronization word, (either Header Resync. Word or Motion Resync. Word or the Resync. Marker). It then decodes the RVLC data backwards. Now, one of the four possible cases shown below can occur and the decoder decides to discard the appropriate part of the bitstream shown shaded in the figures below.

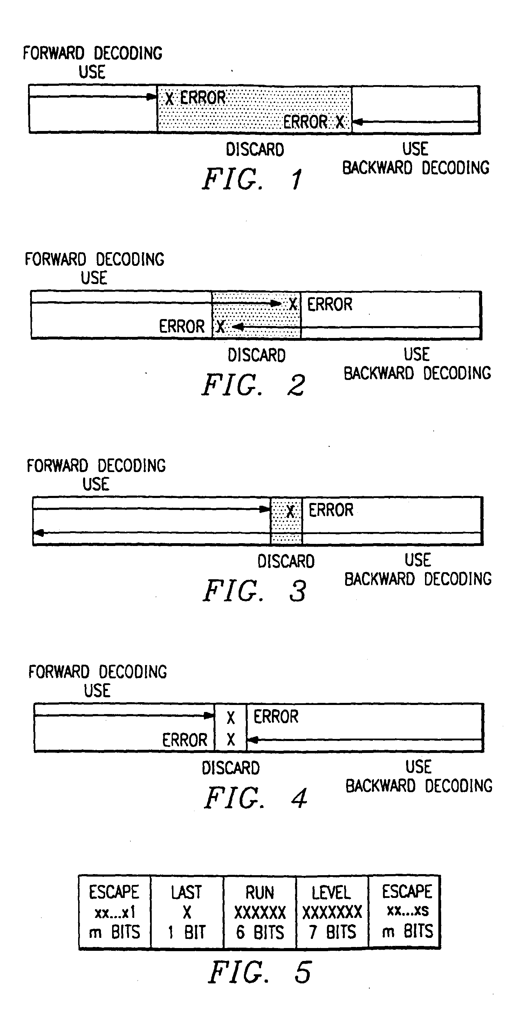

Note that during the backward decoding, in addition to the usual checks for valid data, the decoder also flags the bitstream as being in error if the forward decoded and the backward decoded data do not match despite both directions being decoded without apparent errors..
1) Separated error detected points: MBs whose data are free from errors are used. The data between the error detected points in the forward decode and in the backward decode are discarded (shaded part Figure 1).
2) Crossed error detected points: MBs whose data are free from errors are used. The data between the error detected points in the forward decode and in the backward decode are discarded (shaded in Figure 2).
3) Error is detected in one direction: The MB whose data is corrupted (shaded part in Figure 3) is discarded. The symmetrical situation of no error in the forward direction but an error in the reverse direction is treated similarly.
4) Error is detected in the same MB: Only the corrupted MB (shaded part in Figure 4) is discarded.

In all of the cases above using the RVLC and the reverse (backward) decoding, the decoder is able to salvage a significantly larger part of the bitstream that is not in error.

### Design of the RVLCs

The preferred embodiment parameterized RVLCs have identical code length distributions to previously known, non-reversible VLCs that are known to be near-optimal for probability density functions (pdfs) that occur in coding of image data. The RVLCs presented are parameterized to allow them to be adapted to match a wide range of pdfs, and enable the advantages of two-way decoding while retaining the efficiency of traditional (non-reversible) variable length codes.

Begin with a reversible code with the same length distribution as Golomb-Rice codes, which have recently been applied for coding of prediction errors in lossless image coding applications as noted in the background. Golomb-Rice codes are nearly optimal for coding of exponentially distributed non-negative integers, and describe an integer n in terms of a quotient and a remainder. For simplicity, the divisor is often chosen to be a power of 2, i.e., 2^{k}, and is parameterized by k. The quotient can be arbitrarily large and is expressed using a unary representation; the remainder is bounded by the range [0,2^{k-1}) and is expressed in binary form using k bits. For example, for a Golomb-Rice code with k=2 the number 9 could be represented as 110 01. The "prefix" of the codeword, 110, identifies the quotient of 9/2² as having value 2. The "suffix", 01, is a 2-bit binary expression of the remainder.
Table **2** below gives Golomb-Rice codes for the first several integers for two choices of the parameter k.

To obtain an equivalent length reversible code, one can simply replace the prefix of each Golomb-Rice codeword with a prefix that begins and ends with a "1", with all other bits equal to "0". The exception to this is the prefix of length one, which is set to "0". The suffix in the RVLC remains the same as the suffix in the corresponding Golomb-Rice code. RVLCs constructed according to these rules are shown Table 1 for k=1 and k=2, and it is clear from the table that the length distributions of the RVLCs and the corresponding Golomb-Rice codes are identical. Although it is only the prefix, as opposed to the entire codeword, that is symmetric, these codes can easily be decoded bidirectionally because the non-reversible portions of the codewords have fixed length.

In contrast with the Golomb-Rice code in which the number of codewords at each length is constant, it is also possible to construct codes in which the number of codewords of a given length grows exponentially with length. Compression of run lengths using such codes was described in a paper by Teuhola (J.Teuhola, "A compression method for clustered bit-vectors," Information Processing Letters, vol.7, pp308-311, October, 1978) using the term "exponential-Golomb" coding. Exp-Golomb codes are matched to pdfs having a higher peak and wider tails than typical exponential pdfs. Such a pdf is very well matched to the run-length coded data that occur in quantized image transforms. Exp-Golomb codes can be parameterized according to k, the number of bits in the suffix of the codeword.
Table **2** illustrates the exp-Golomb code for k=1,2. It is possible, though less straightforward, to construct a reversible code that has the same length distribution as an exp-Golomb code. To do this again impose the constraint that the first and last bits of the prefix be "1". As before, the prefix of length one is set to "0". Require that all odd-indexed bits in the prefix, with the exception of the first and last bit, be "0". For example, in all prefixes of length 5, the third bit is "0", and the first and fifth bits are "1". The even-indexed bits are allowed to vary arbitrarily, allowing 2^{(l-1)/2} possible prefixes of length l, where l is odd. In constructing the code, each prefix is concatenated with the 2^{k} distinct suffixes of length k.
Table **2** gives an RVLC constructed according to these rules. Again, it is clear that the length distribution of the RVLC is identical to that of the corresponding reversible code.

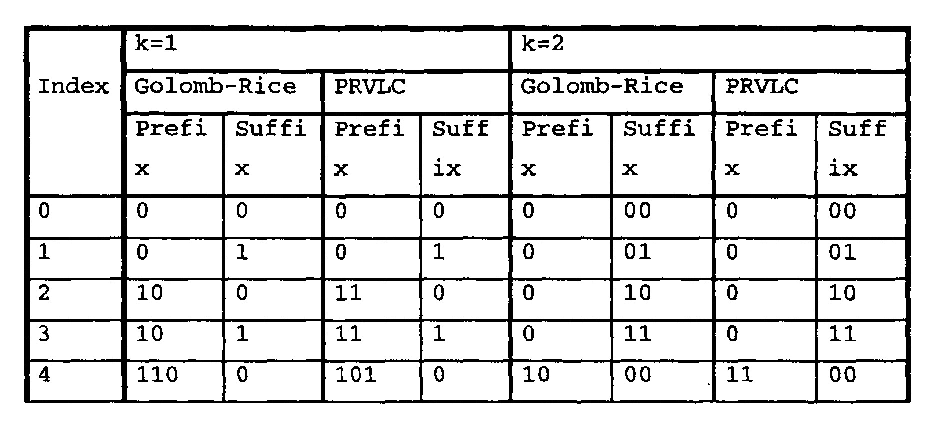

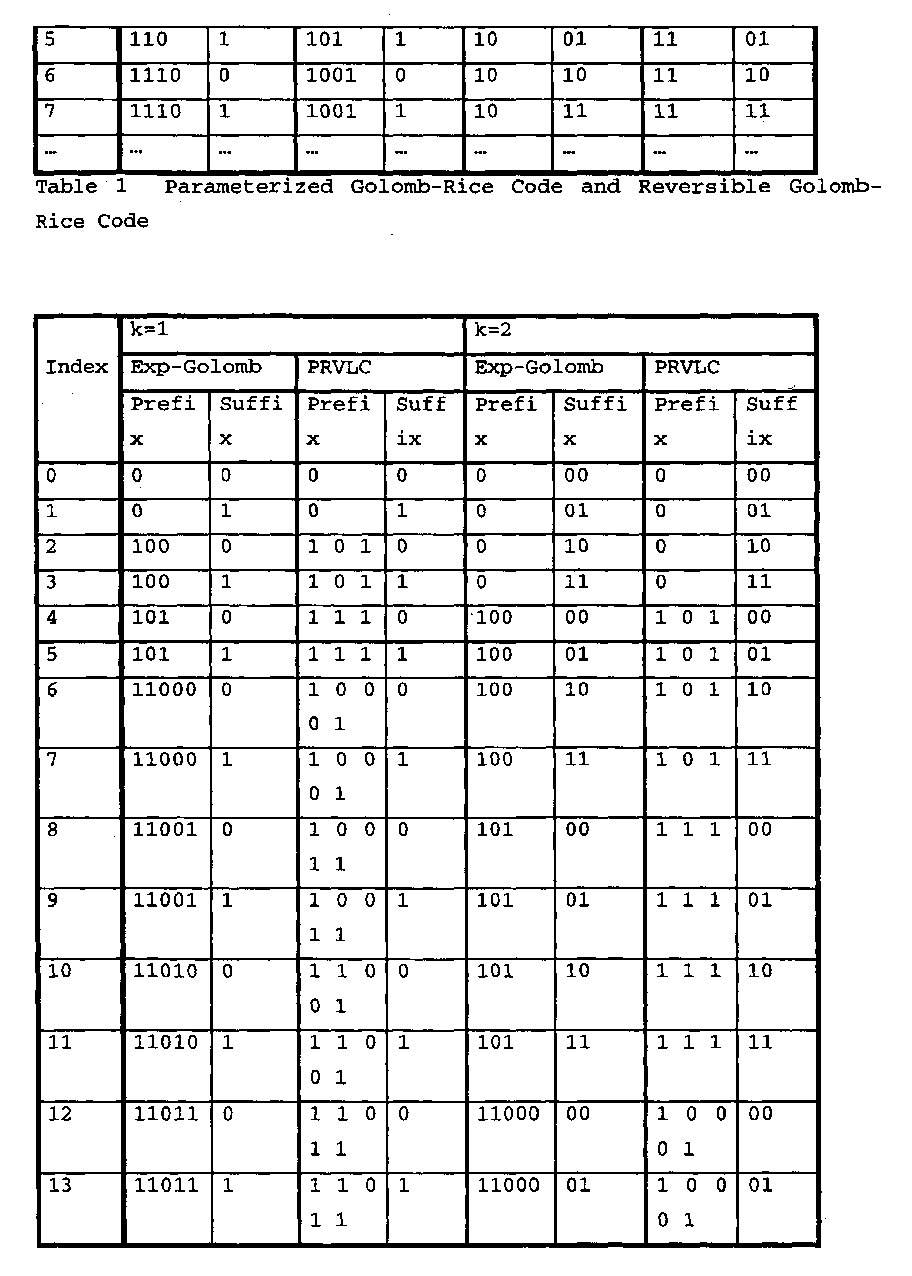

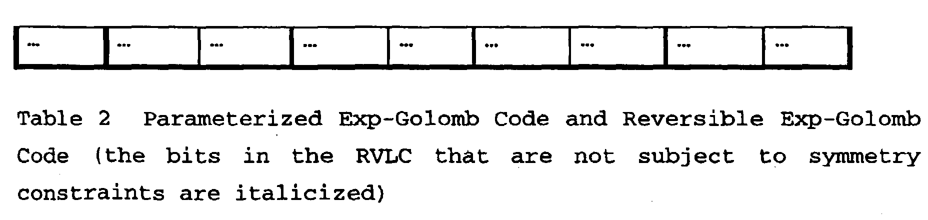

Design the complete codeword table as follows:
1.Make the probability table of most commonly occurring EVENTs.
2.For each k, assign codewords from the corresponding RVLC table to the EVENTs, with shorter codeword mapped to EVENT of higher probability. Then select the k, that gives the shortest average length.

Using this methodology the RVLCs were designed for each of (1) Header Data (COD + MCBPC) (for both INTRA and INTER frames), (2) Motion Vector Data, (3) INTRA frame DCT Data, and (4) INTER frame DCT Data. Use two classes of RVLCs. The first class of RVLC is used to code the header information (COD + MCBPC). One RVLC is used for the INTRA frames and one is used for the INTER frames. These are shown in Table 4 and Table below:

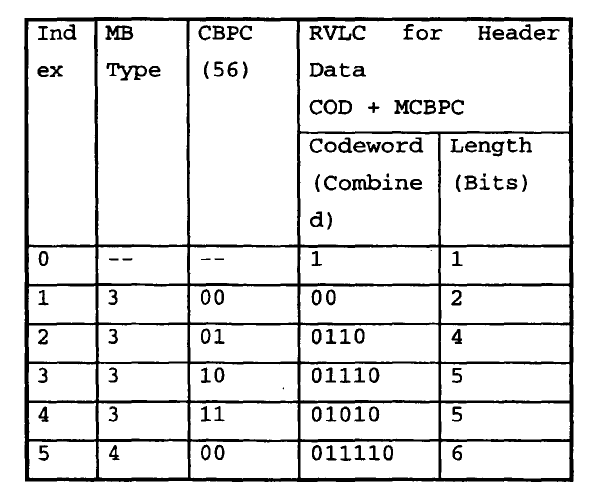

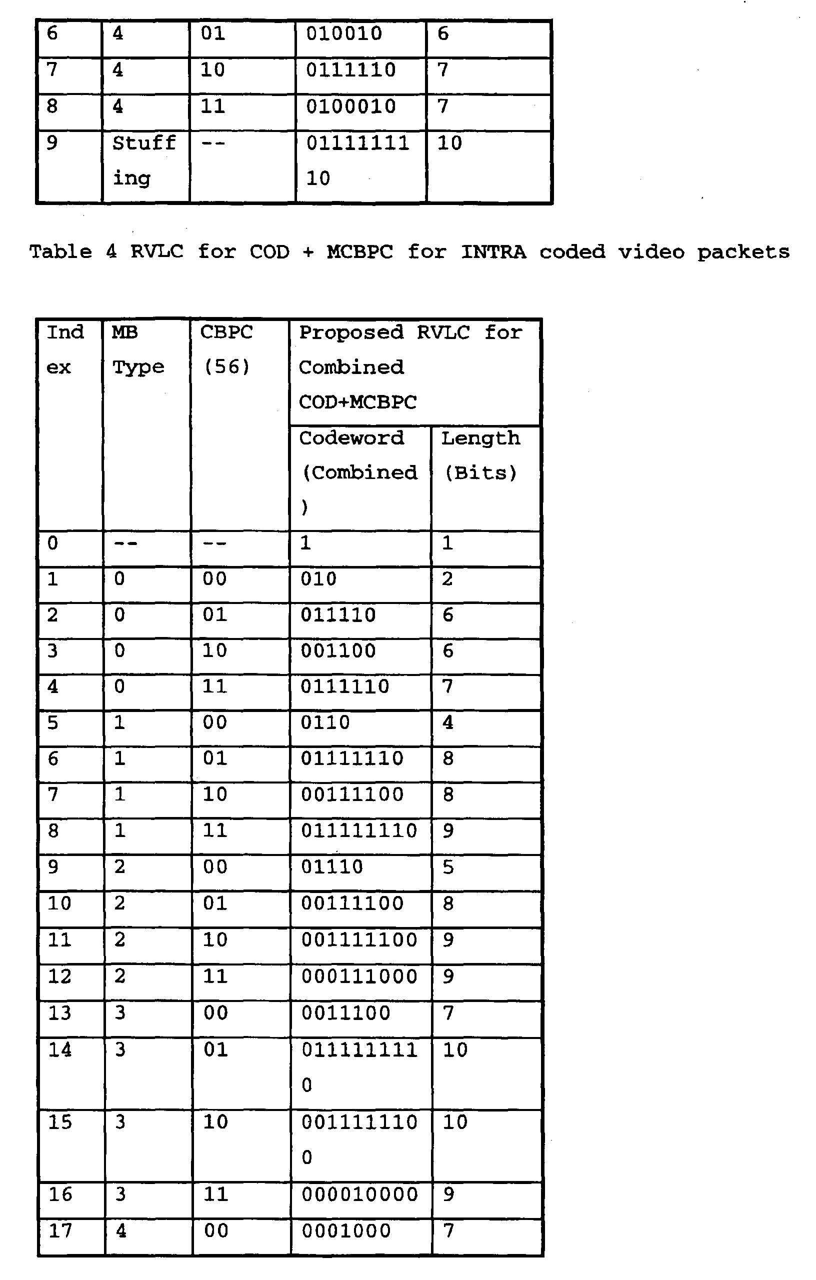

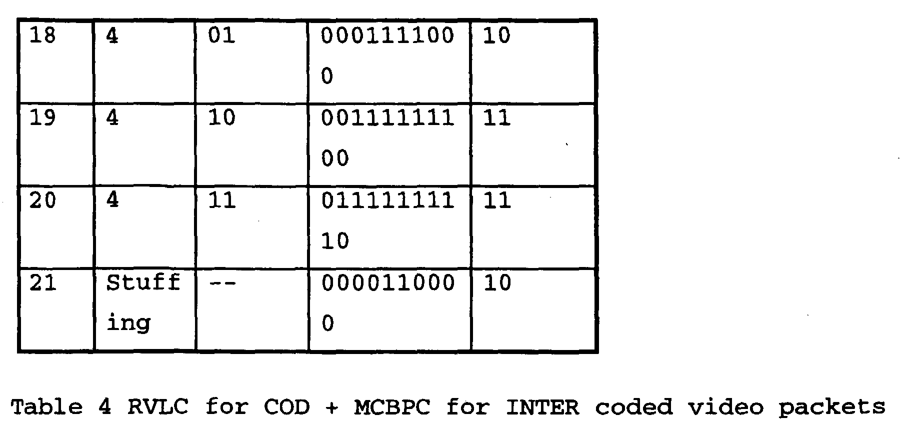

The second class is an RVLC, which can be parameterized by a parameter k, will be used for the entropy coding of quantized DCT coefficients and also the coding of the motion vector data. Table 7 gives the code tables for the most commonly occurring EVENTs and codewords for k=1 and k=2 for the DCT coefficients.. In the table, the last bit "s" denotes the sign of the level, "0" for positive and "1" for negative. The remaining EVENTs are coded with a fixed length code (FLC), as depicted in Figure 5.

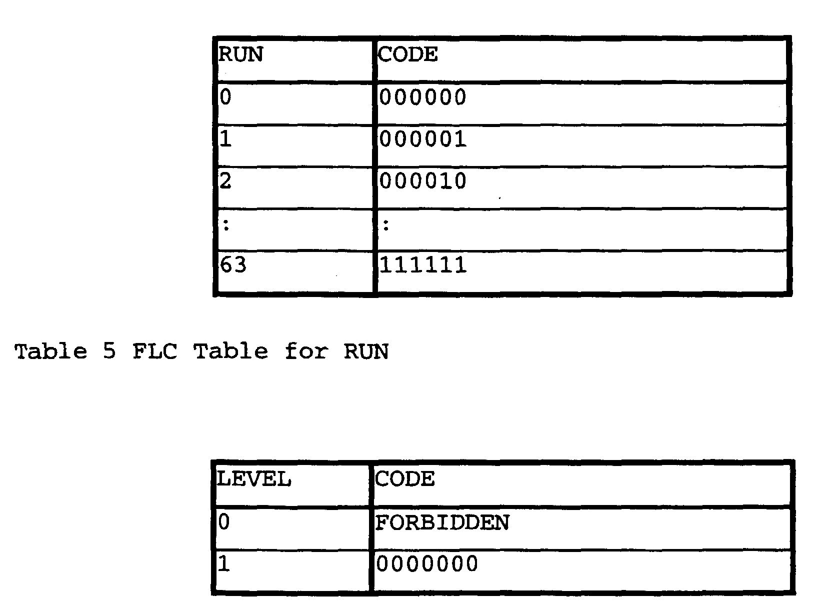

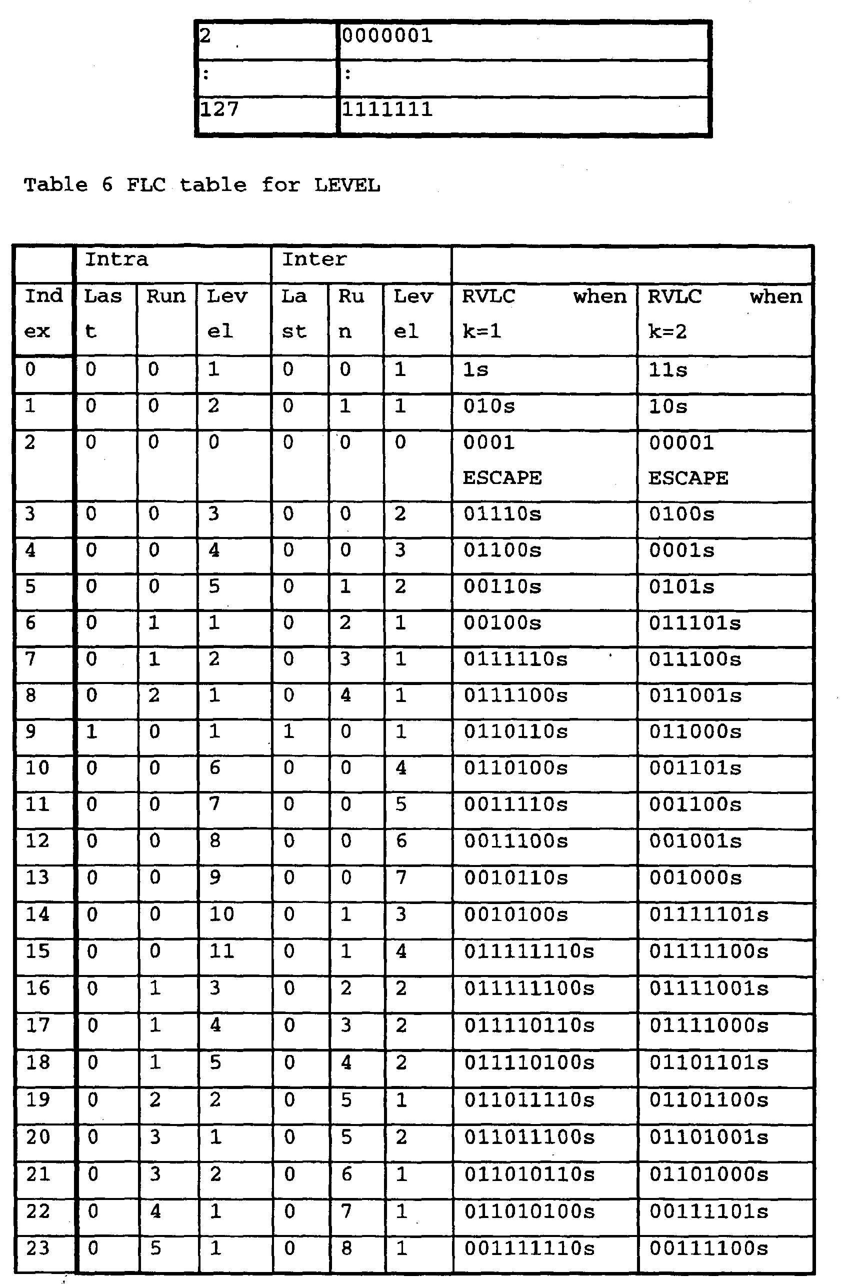

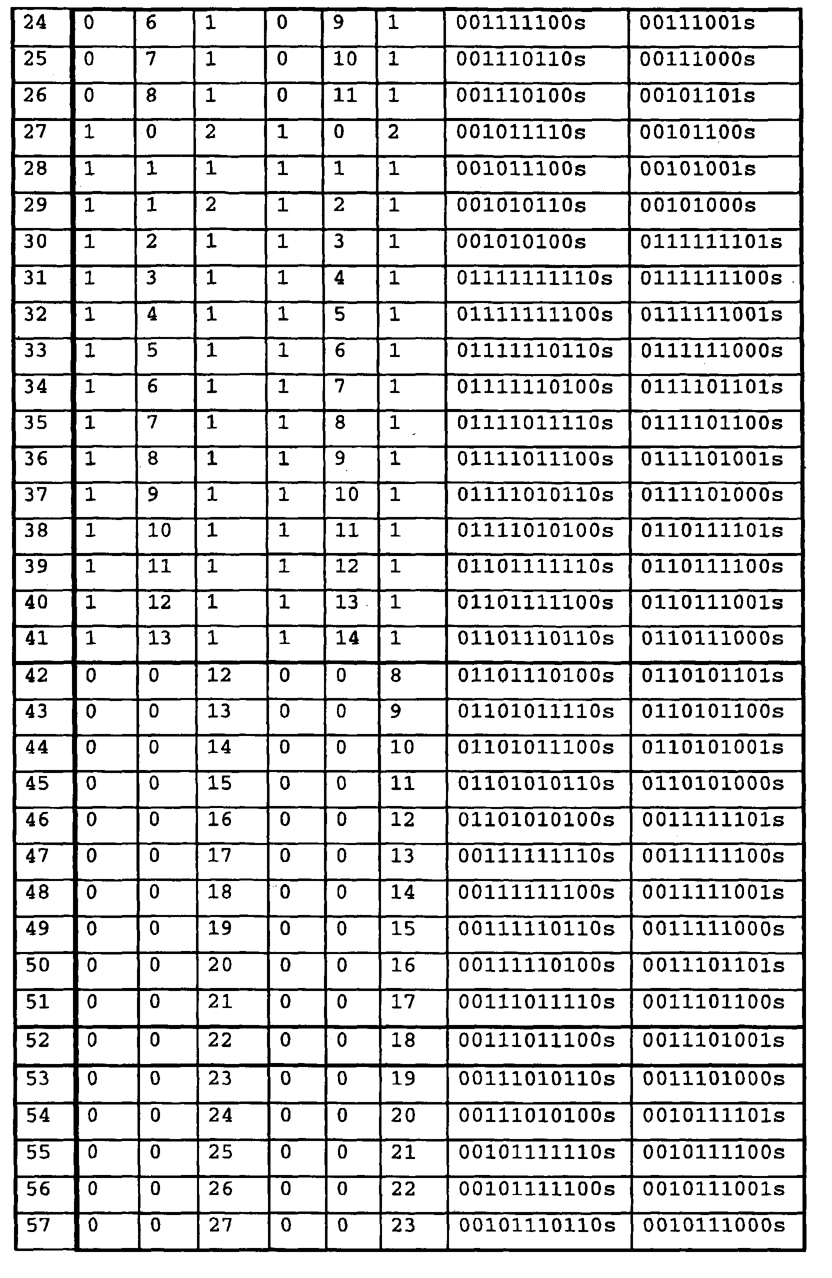

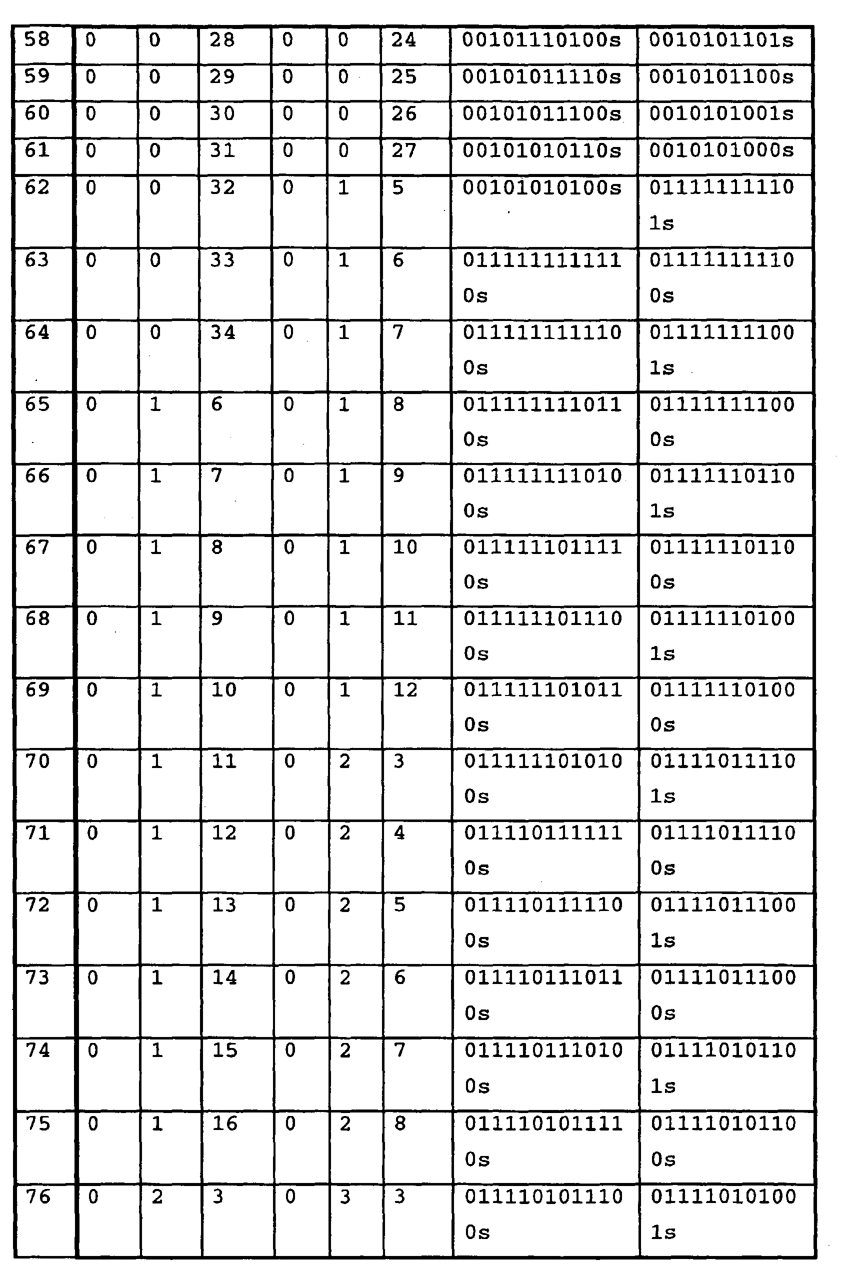

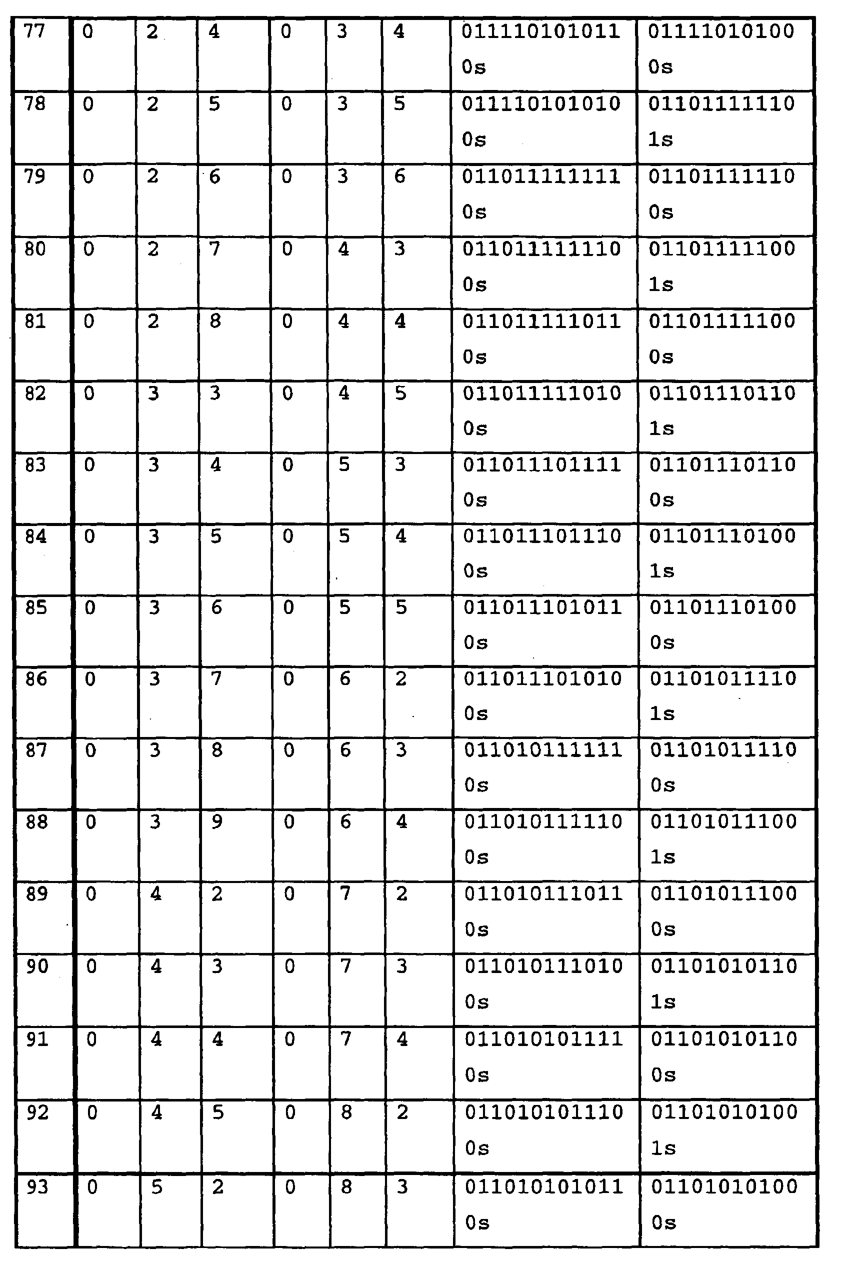

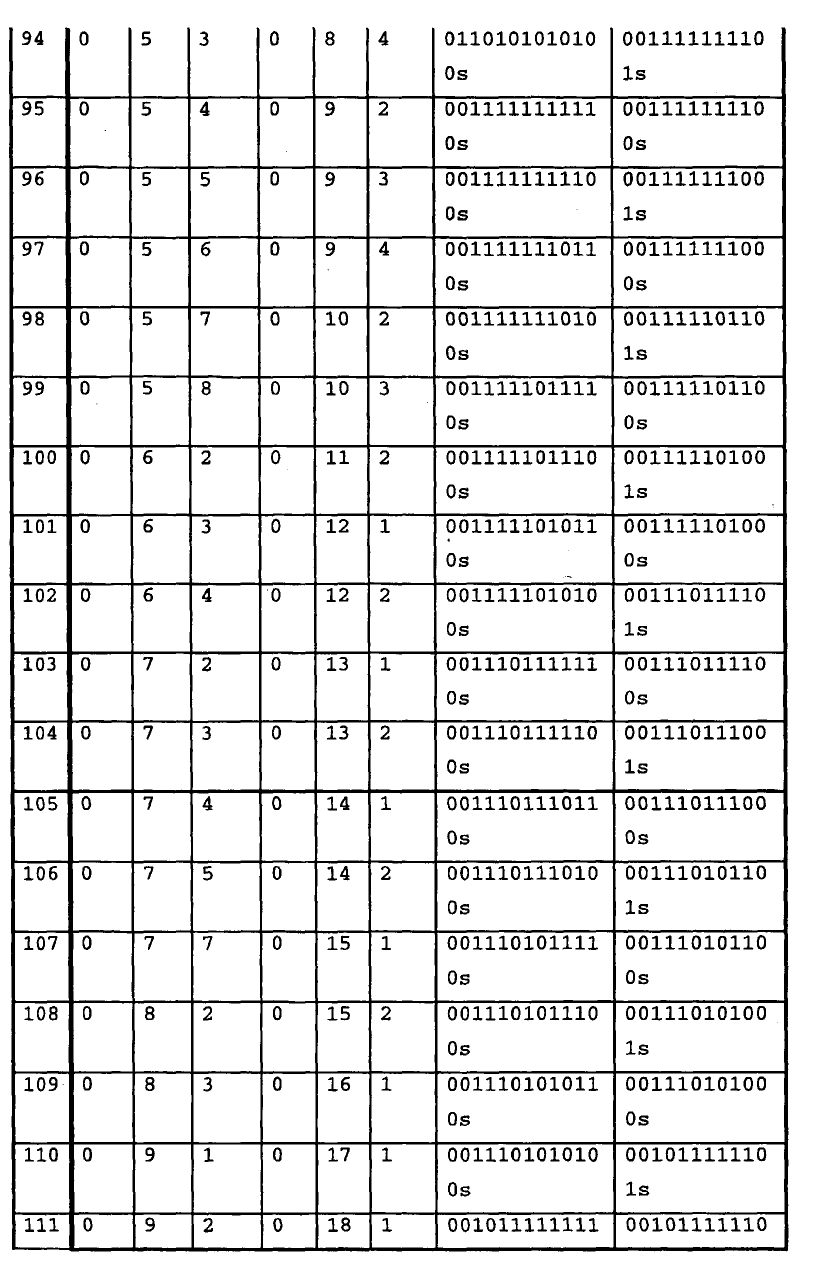

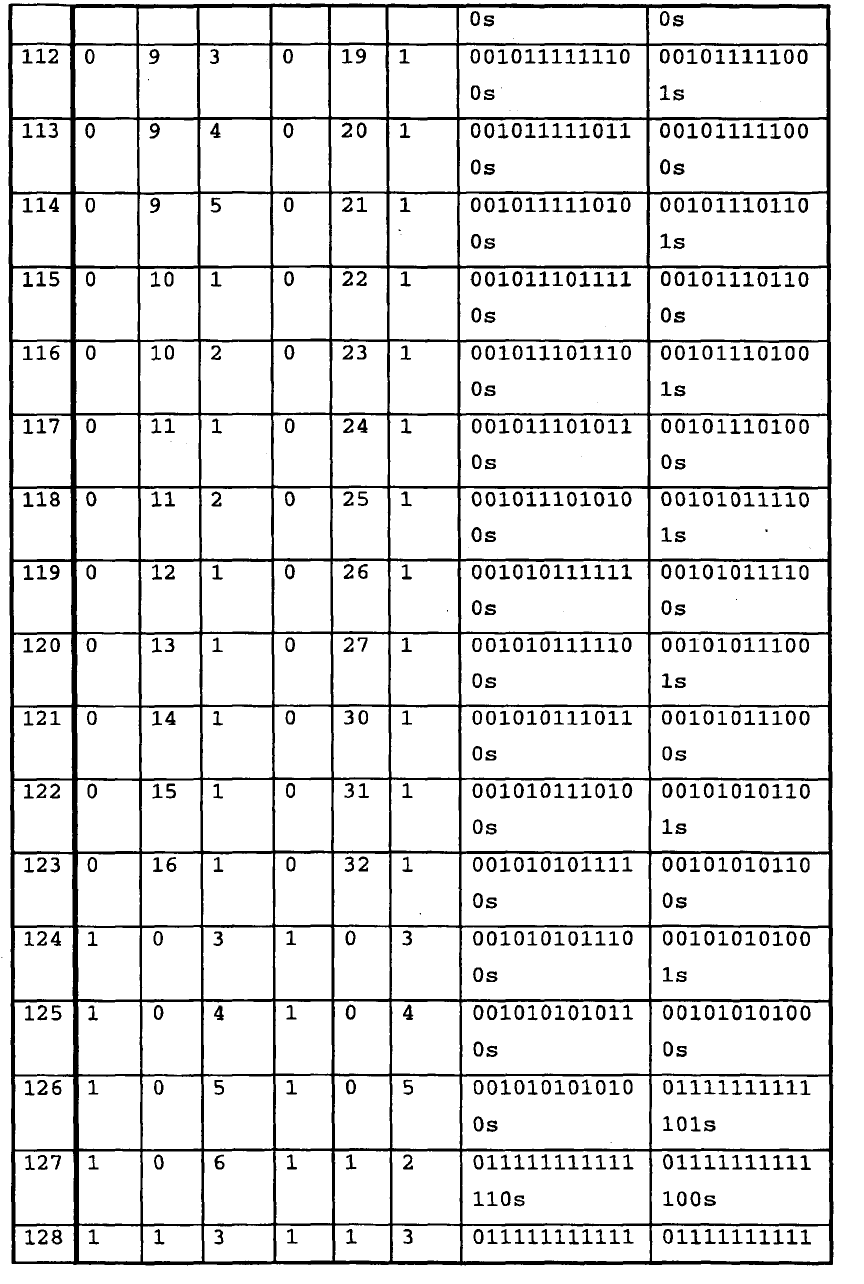

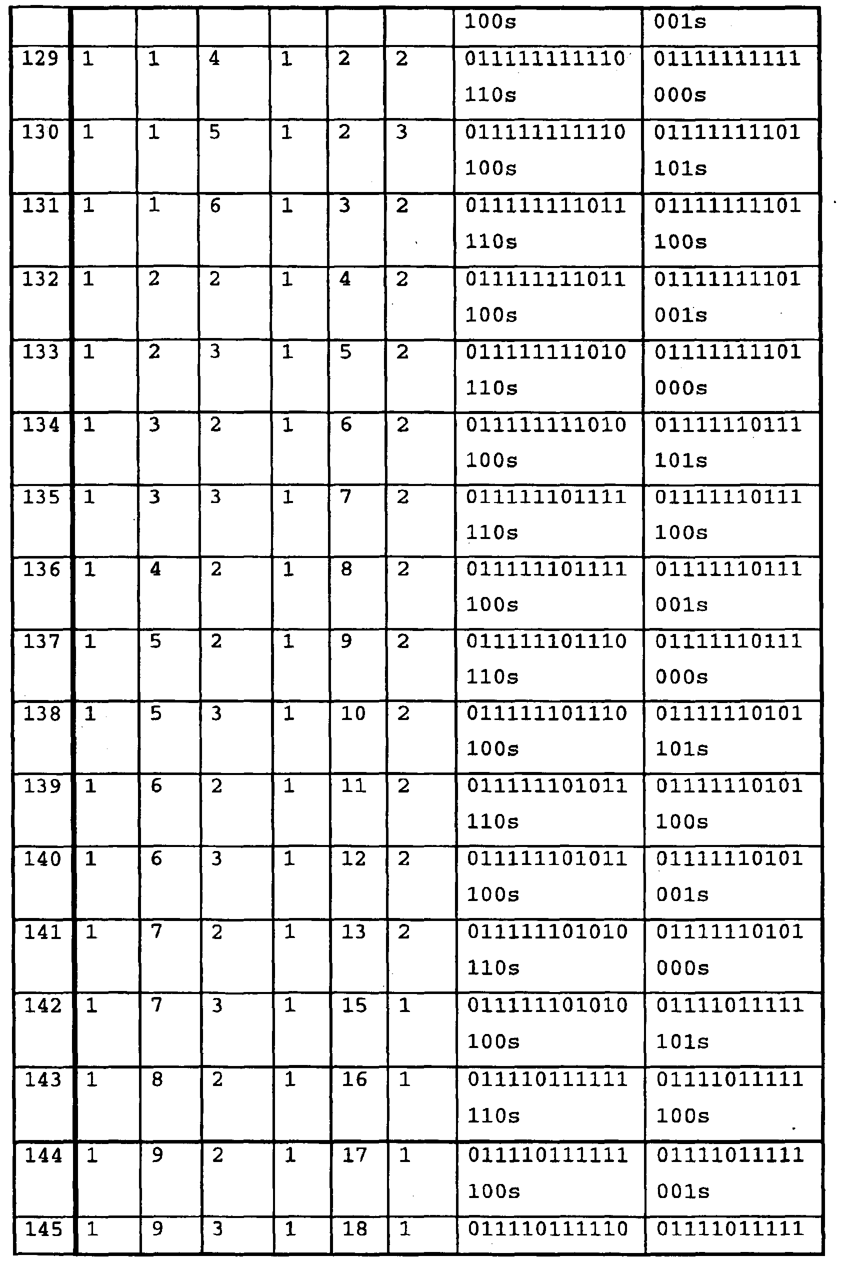

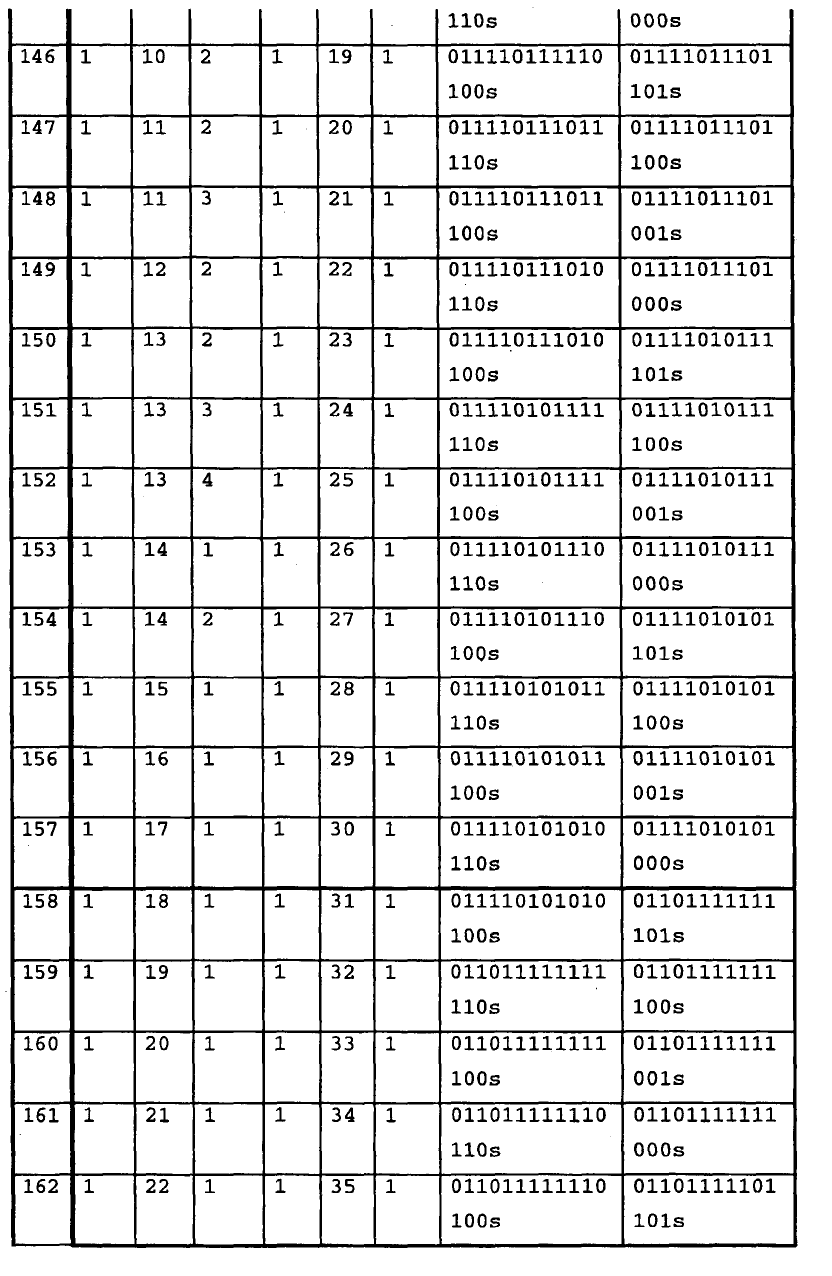

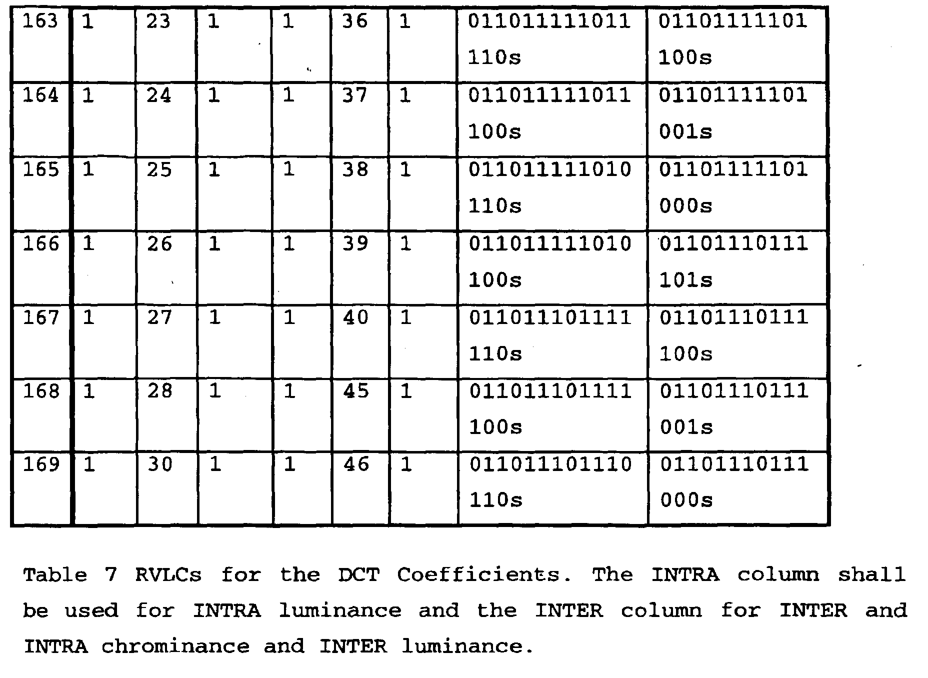

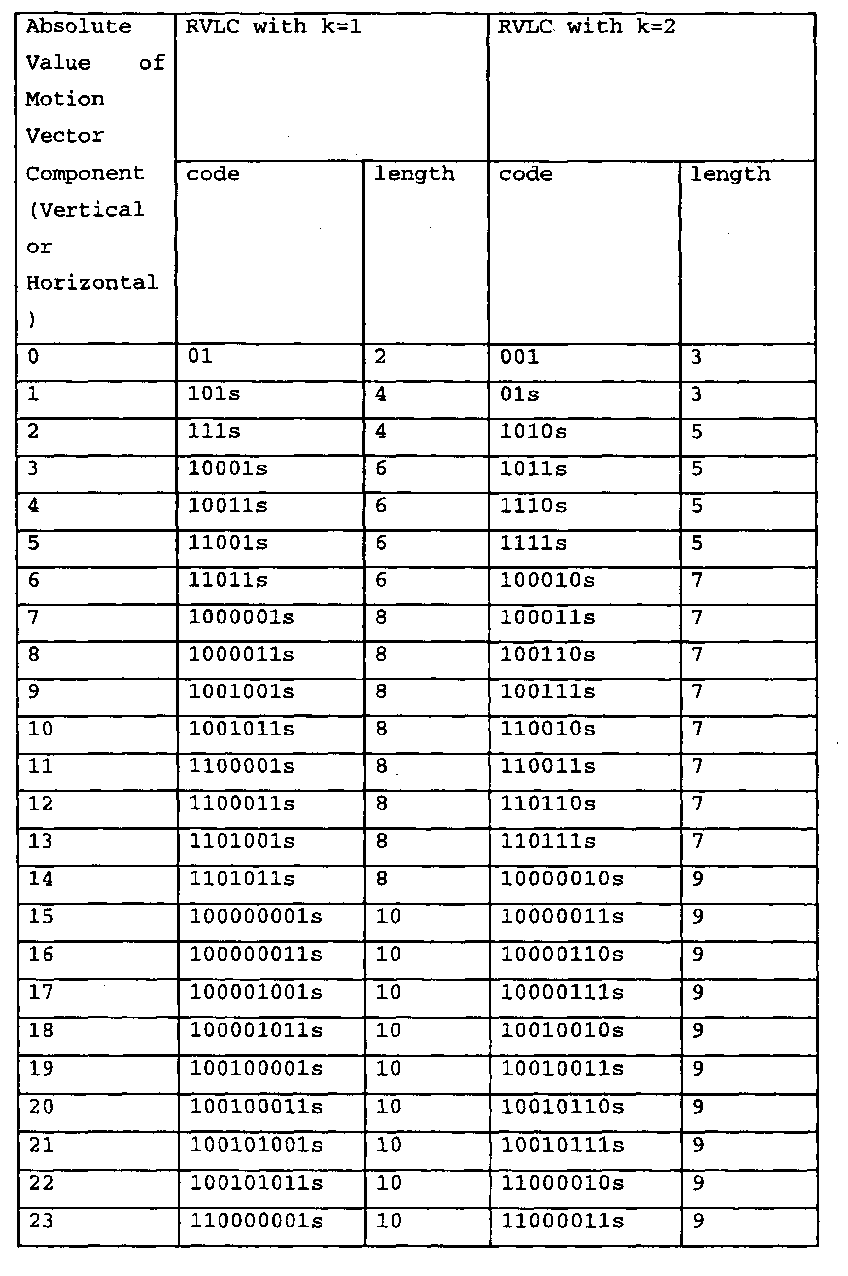

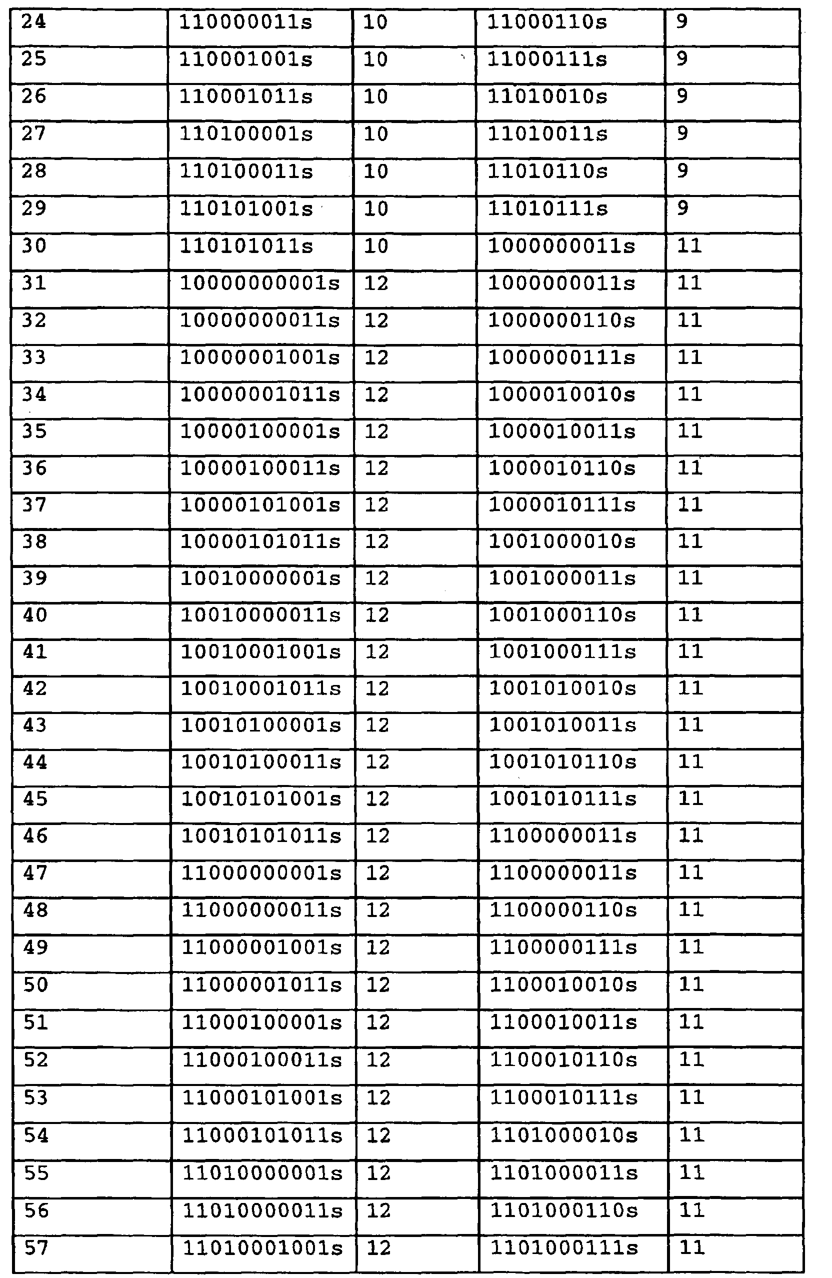

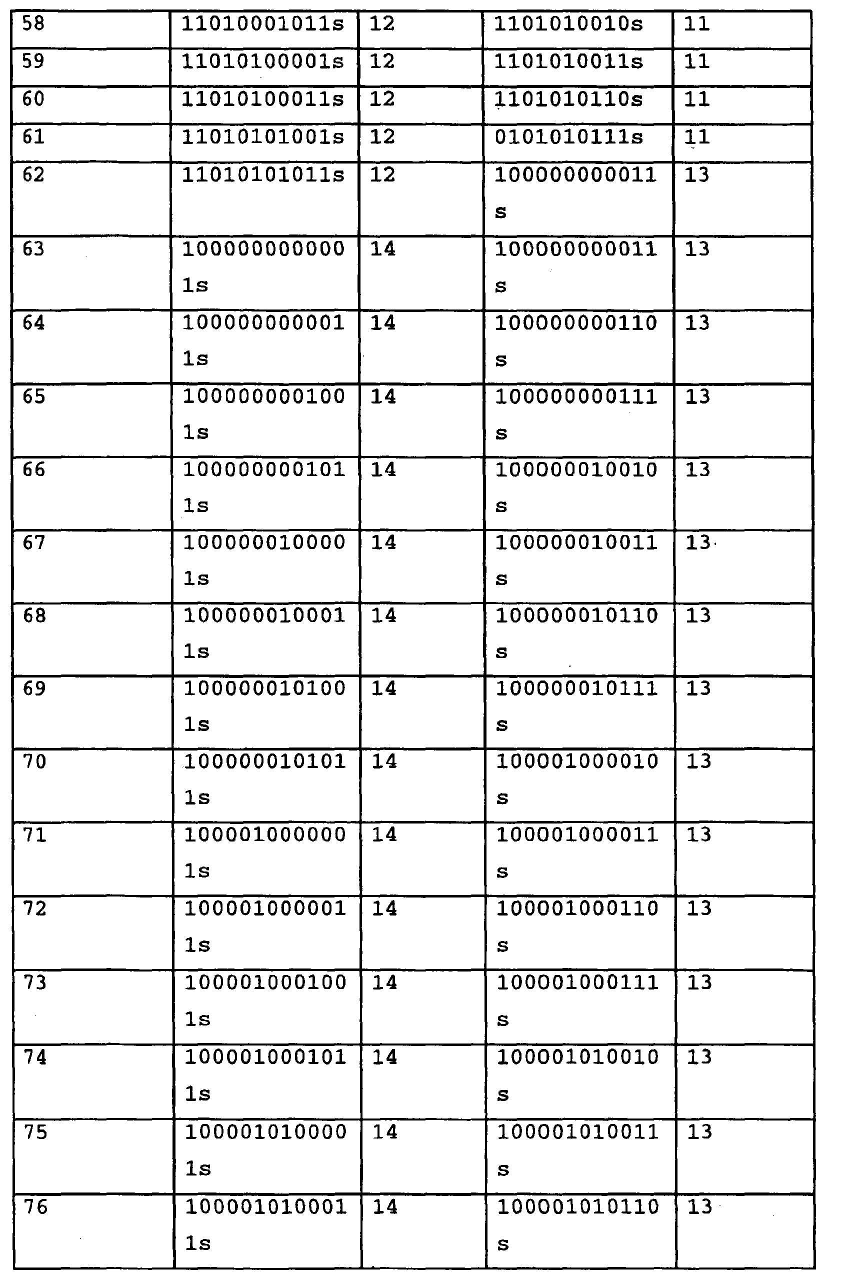

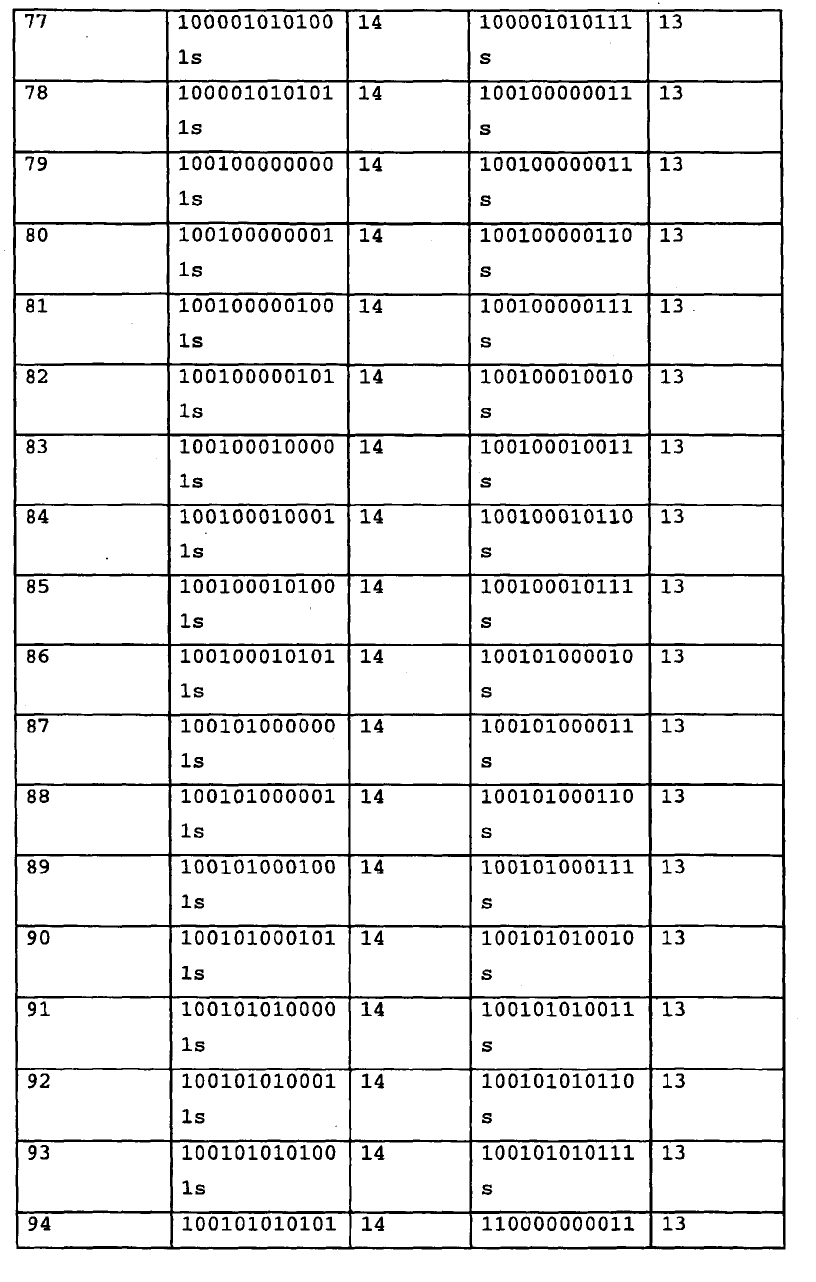

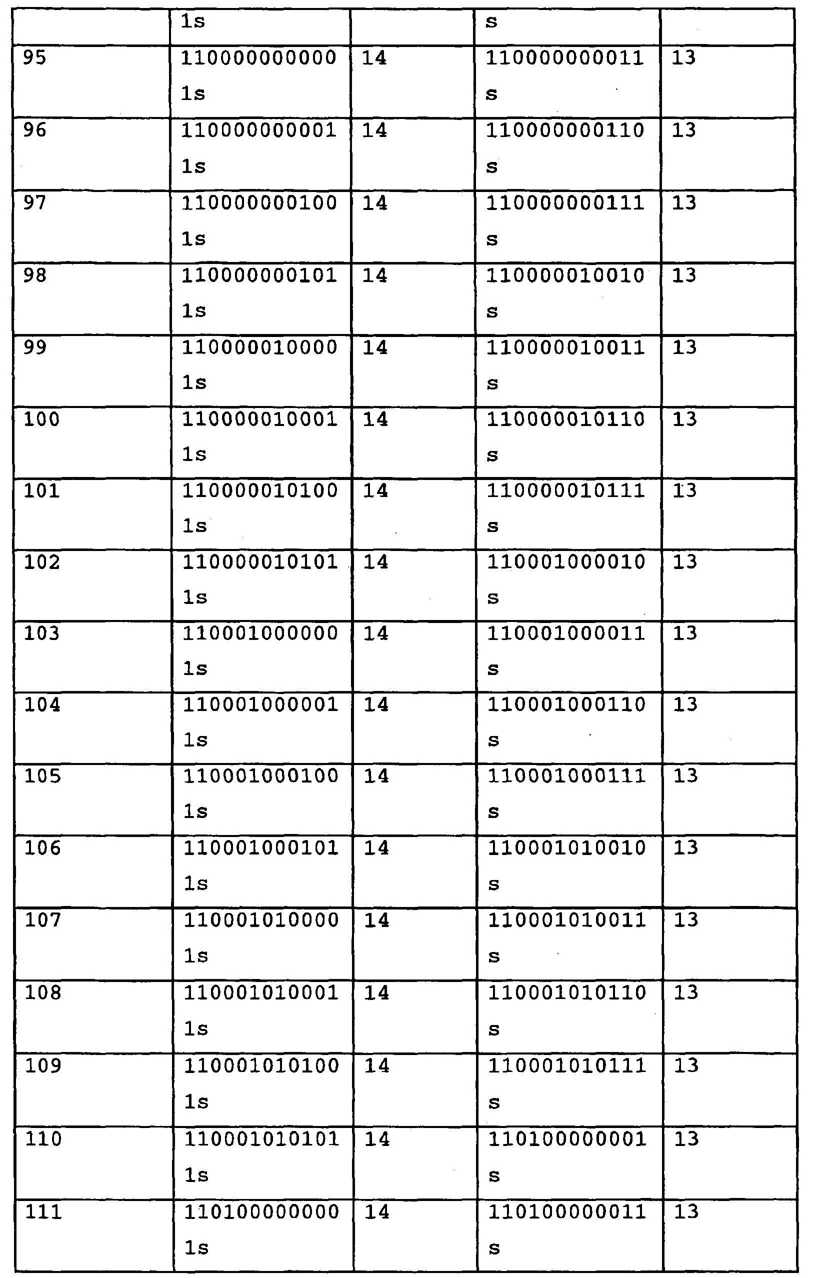

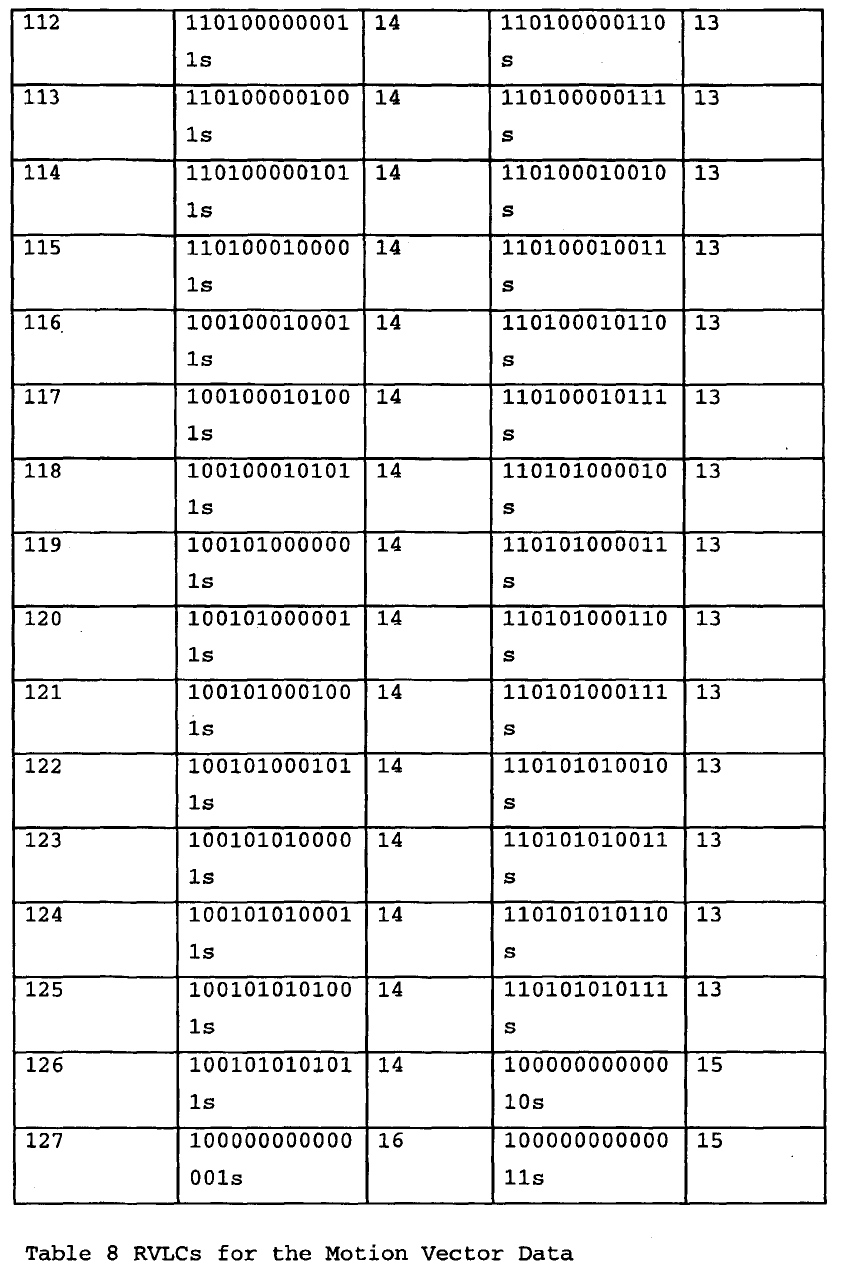

### Alternative RVLCs and uses

The foregoing preferred embodiment used preferred embodiment RVLCs within a preferred embodiment syntax in which the motion data was partitioned into header data and motion vector data and separated by a Header Resynchronization Word. The preferred embodiment RVLCs can also be used with the data partitioning as in Figure 6a by using the codes of Table 7 for the DCT data (DCT1, DCG2, ... DCTn) of Figure 6c.

Further, an RVLC can be used to code the CBPY plus DQUANT fields.

An alternative preferred embodiment uses the RVLC of Table 8 for the motion vector data without also using the separated header data and header resynchronization word.

Lastly, for other resynchronization markers, other RVLCs can be made in analogous fashions. For example, following Tables 9-11 are other versions of foregoing Tables 4 and 7-8.

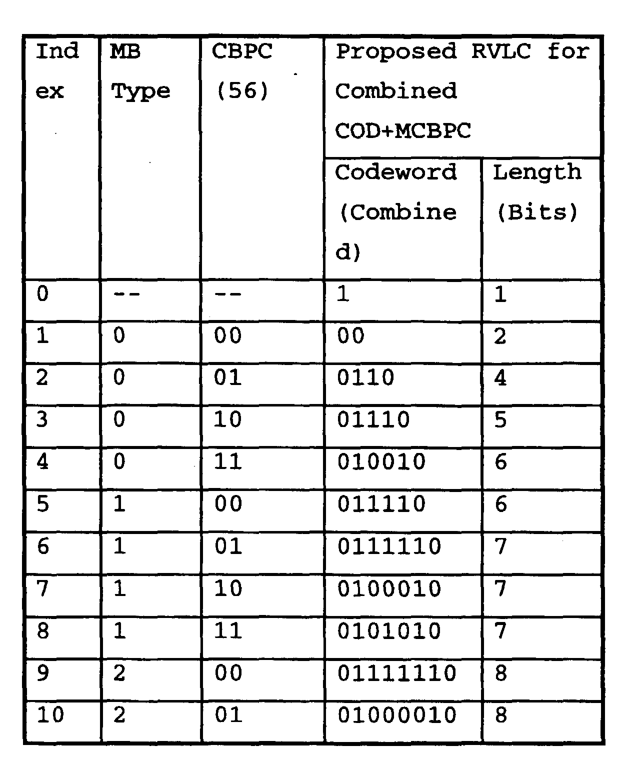

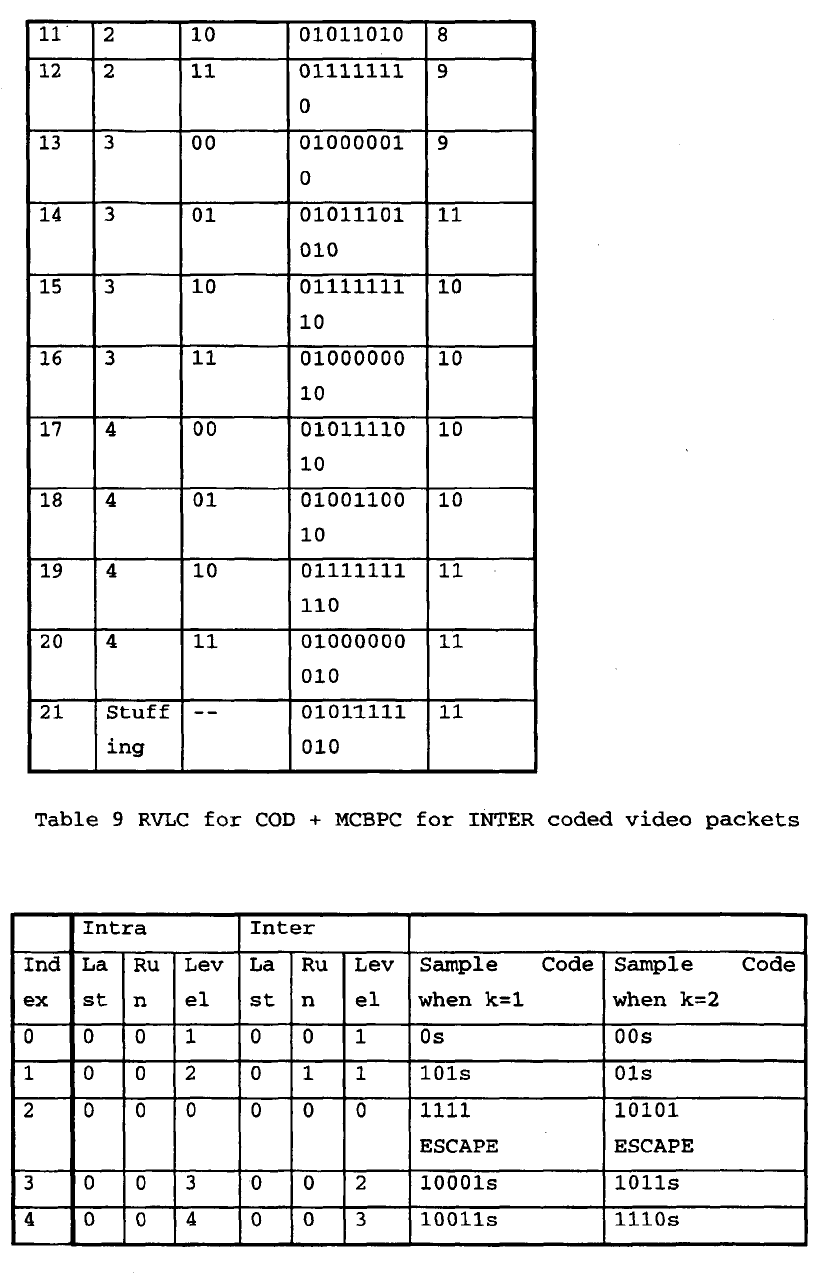

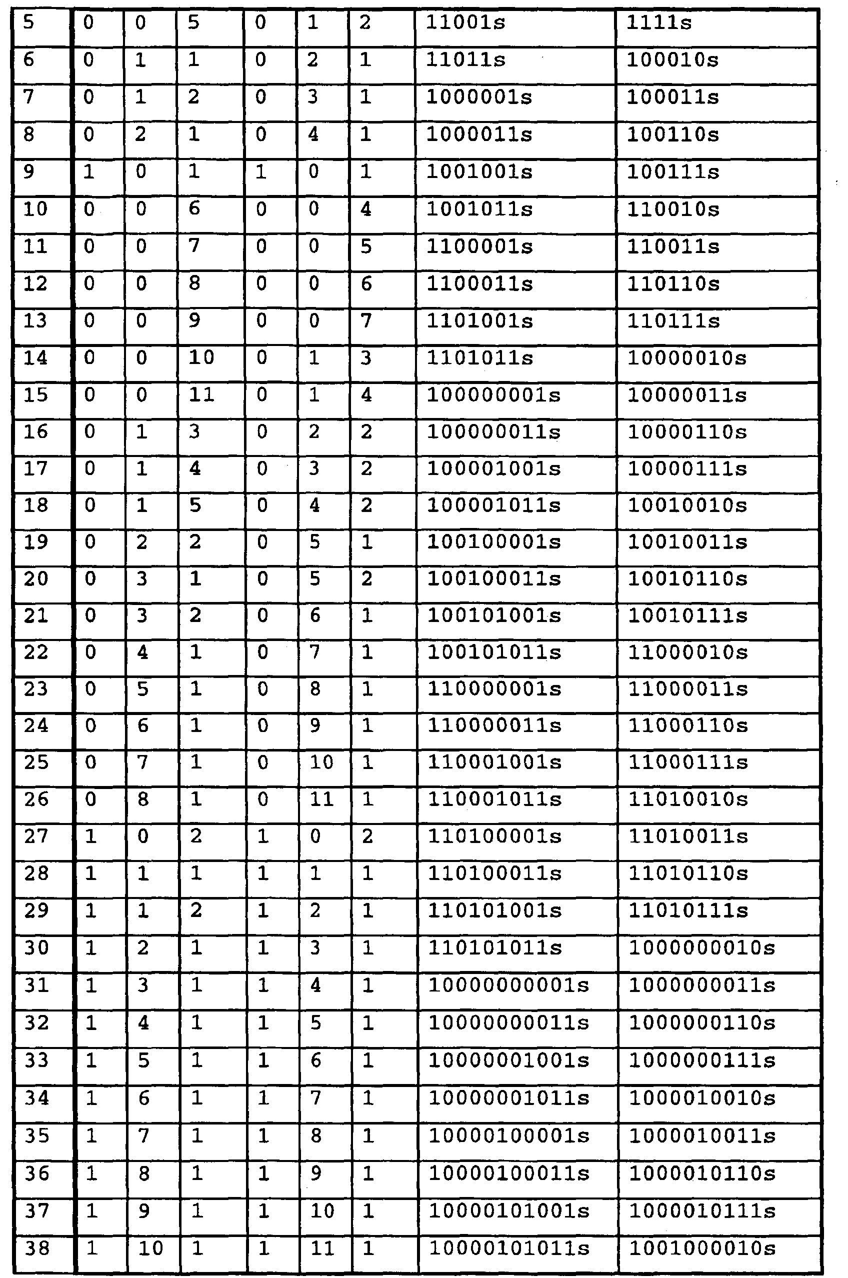

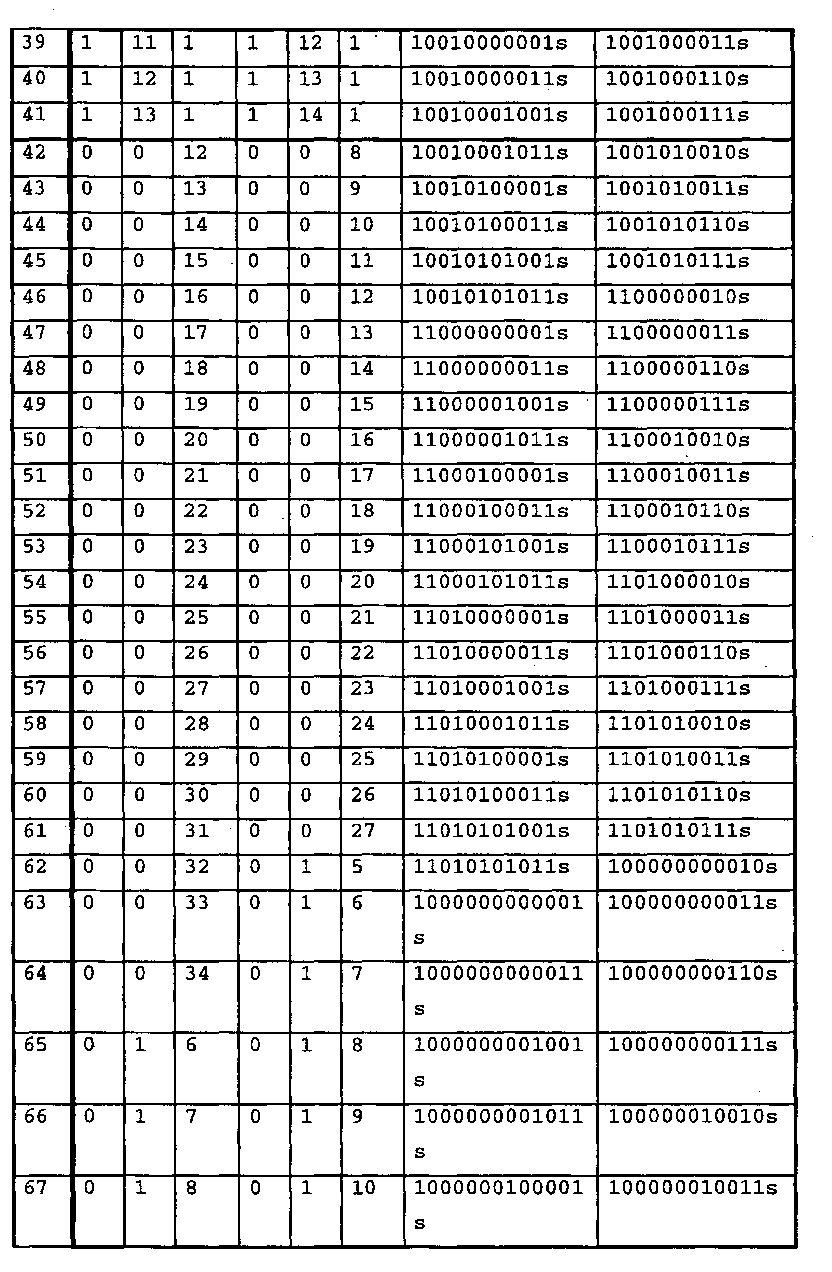

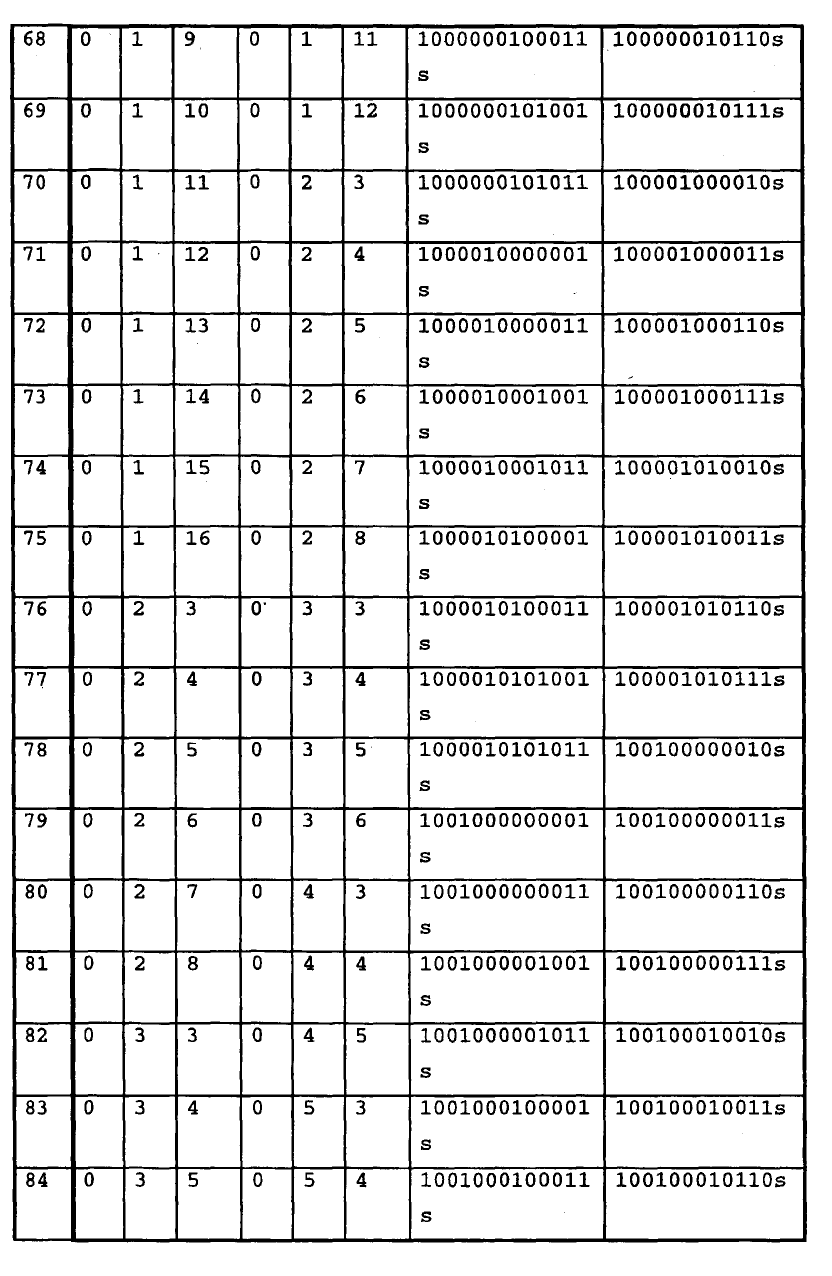

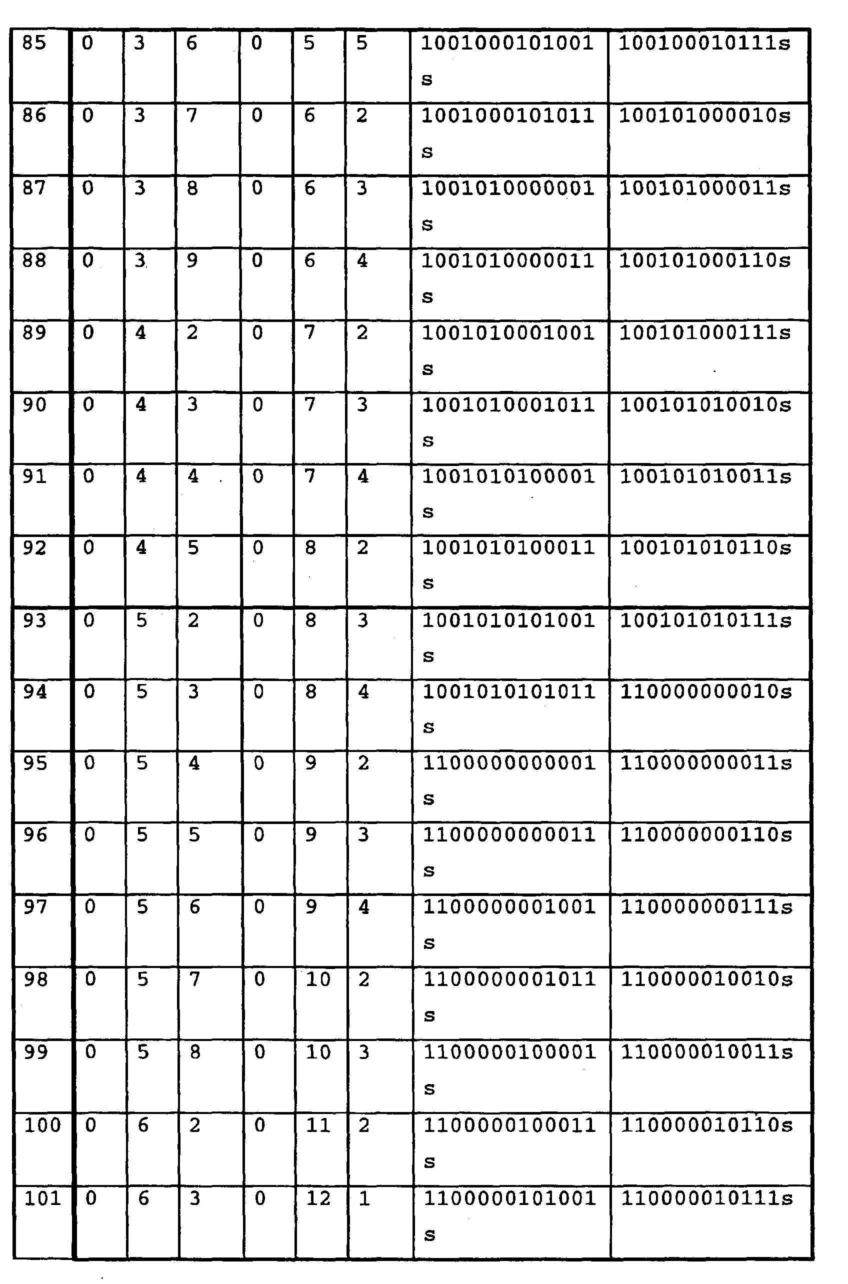

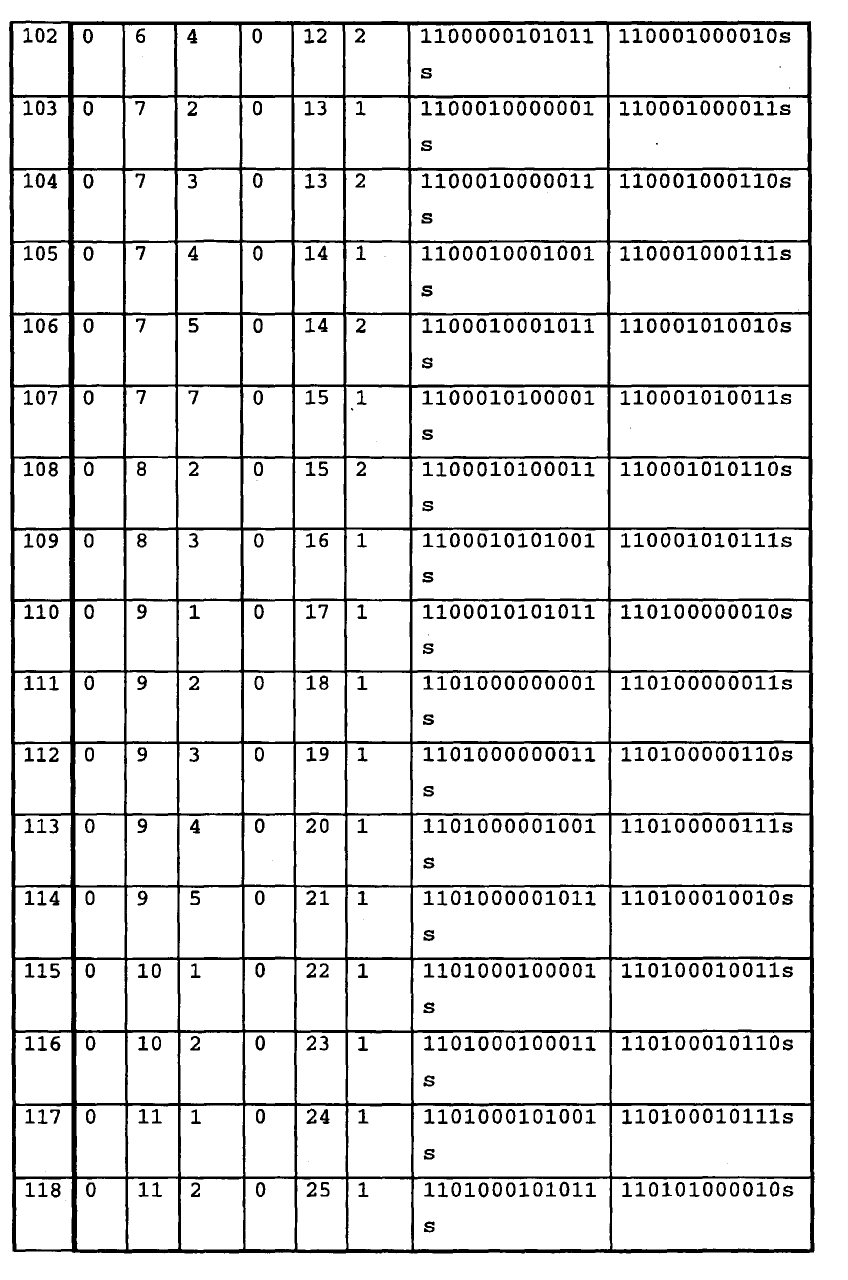

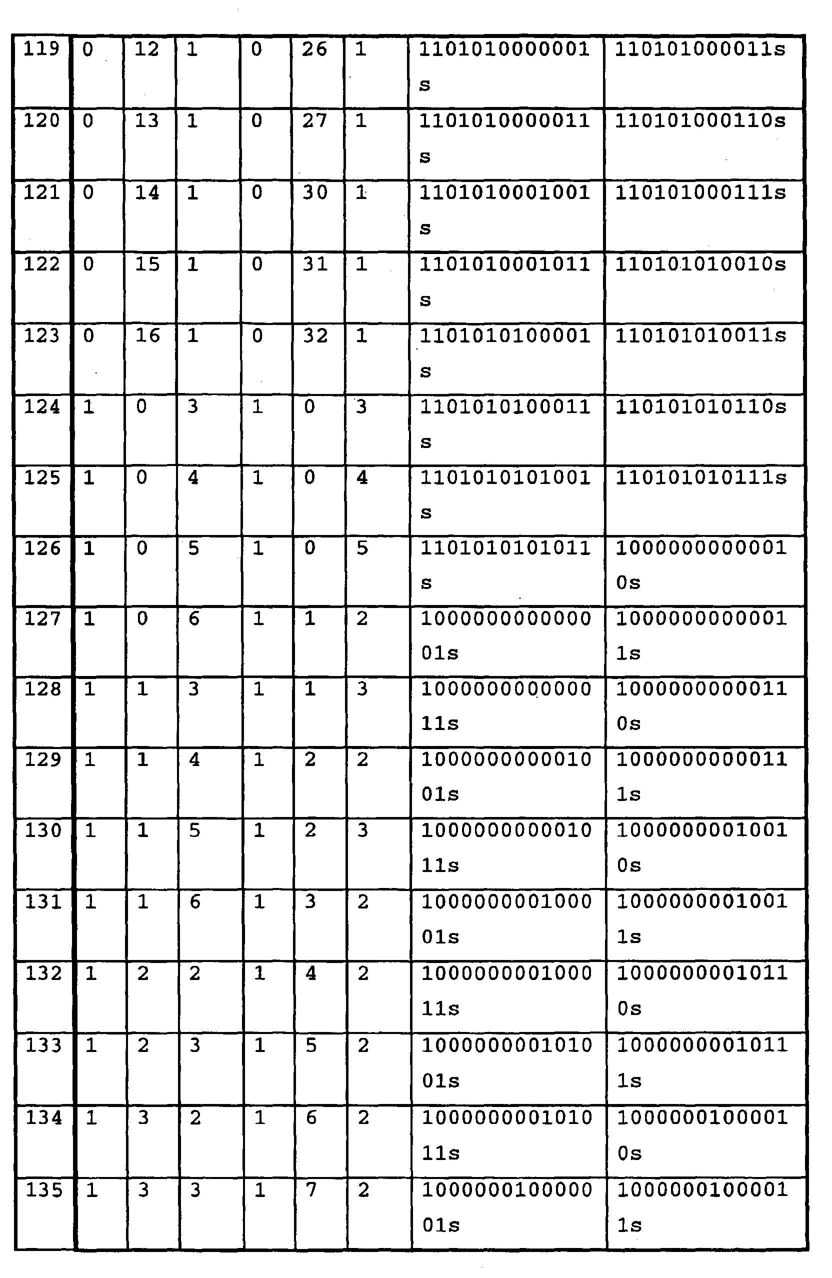

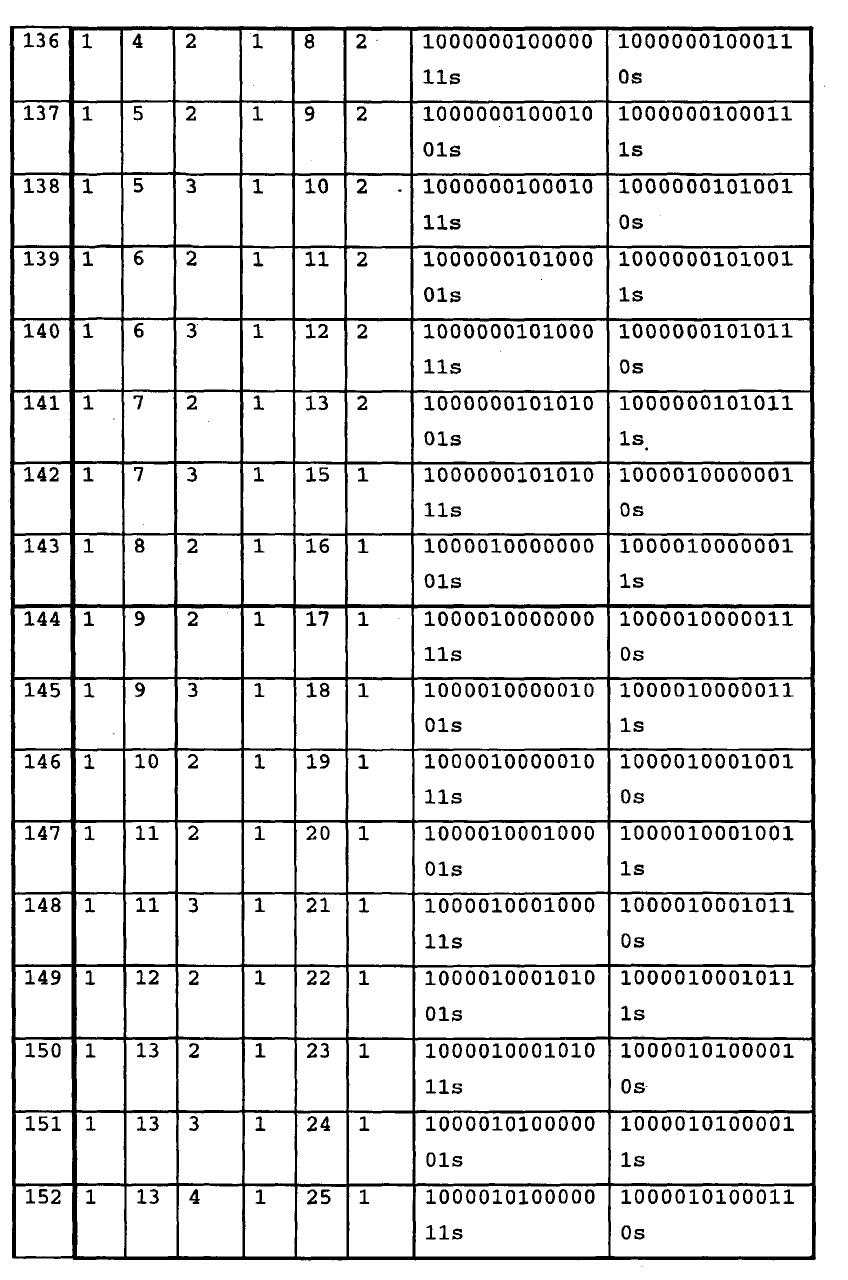

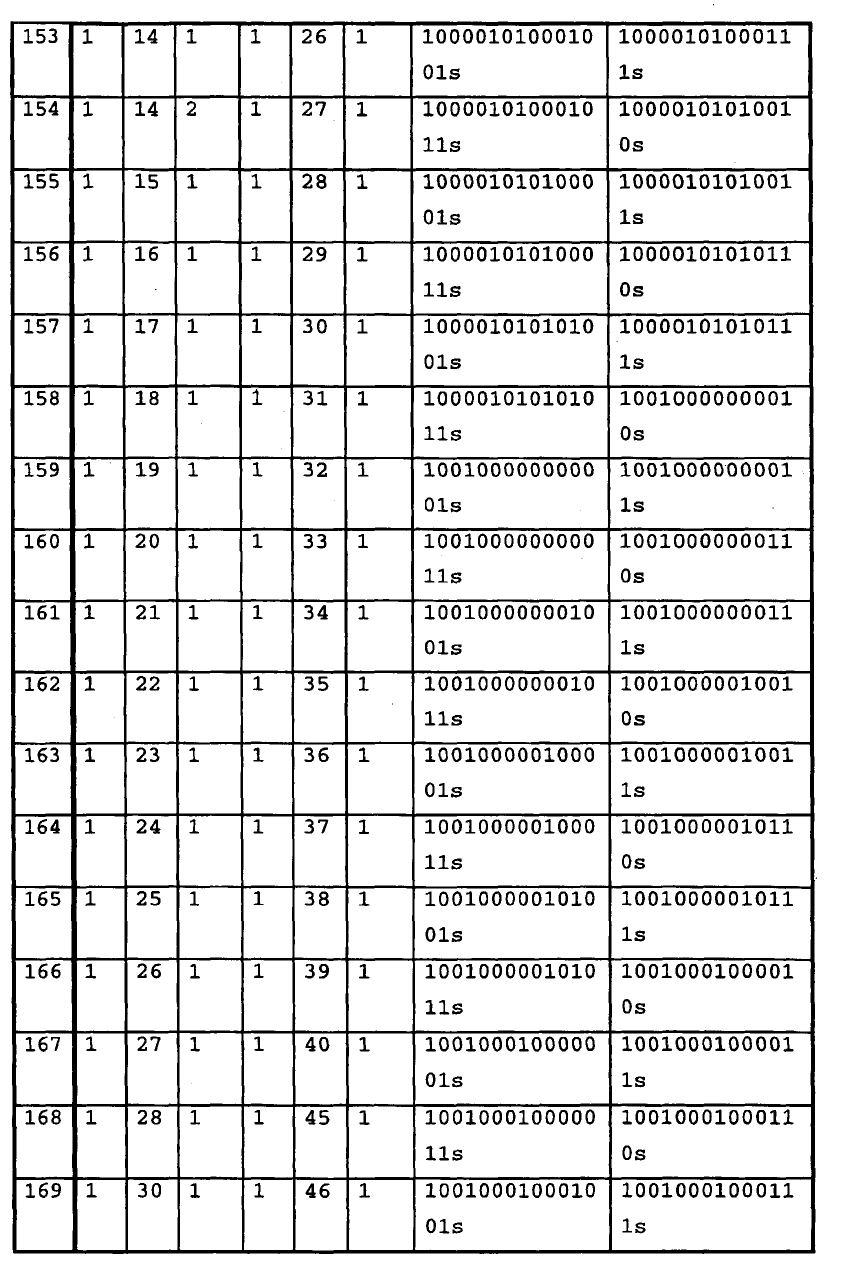

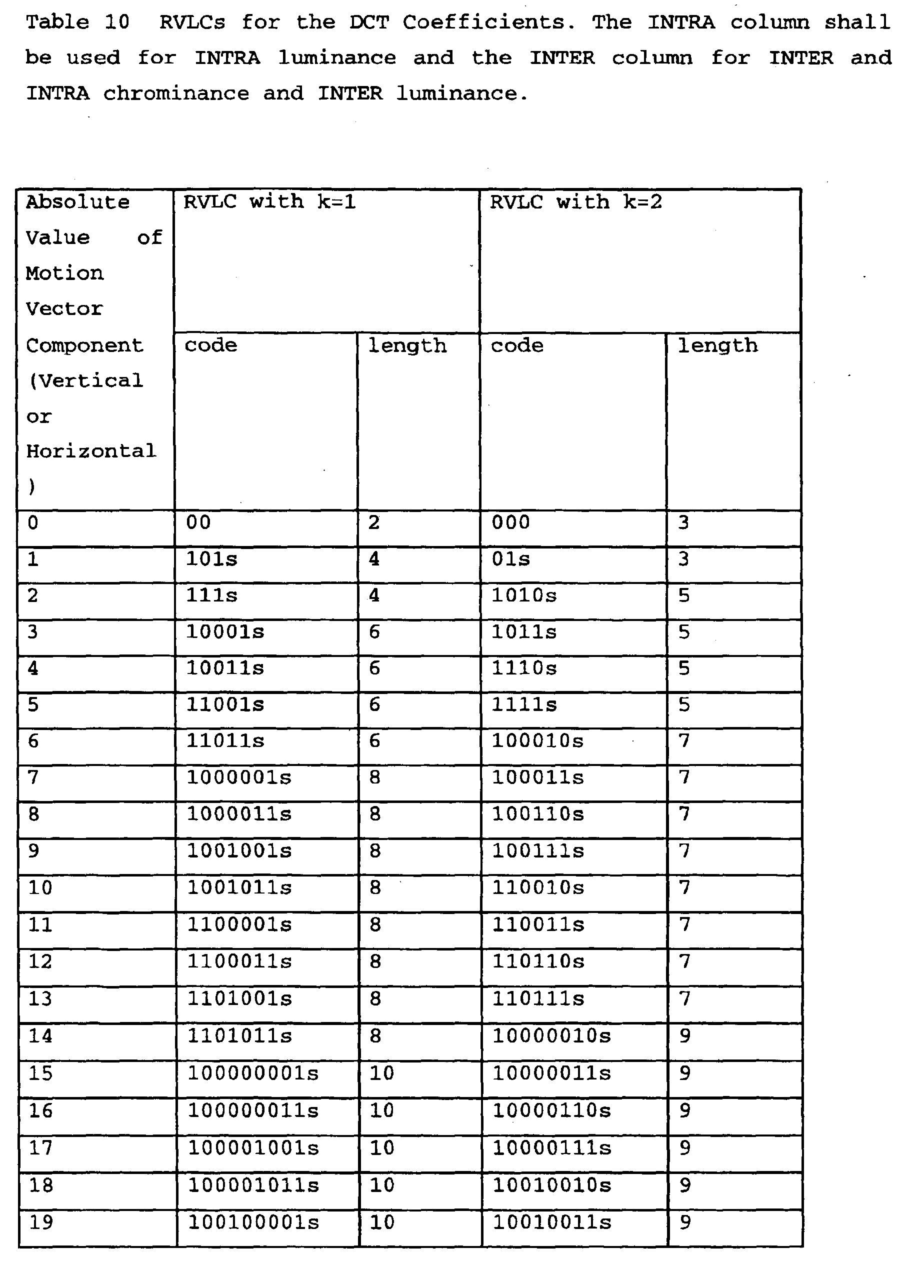

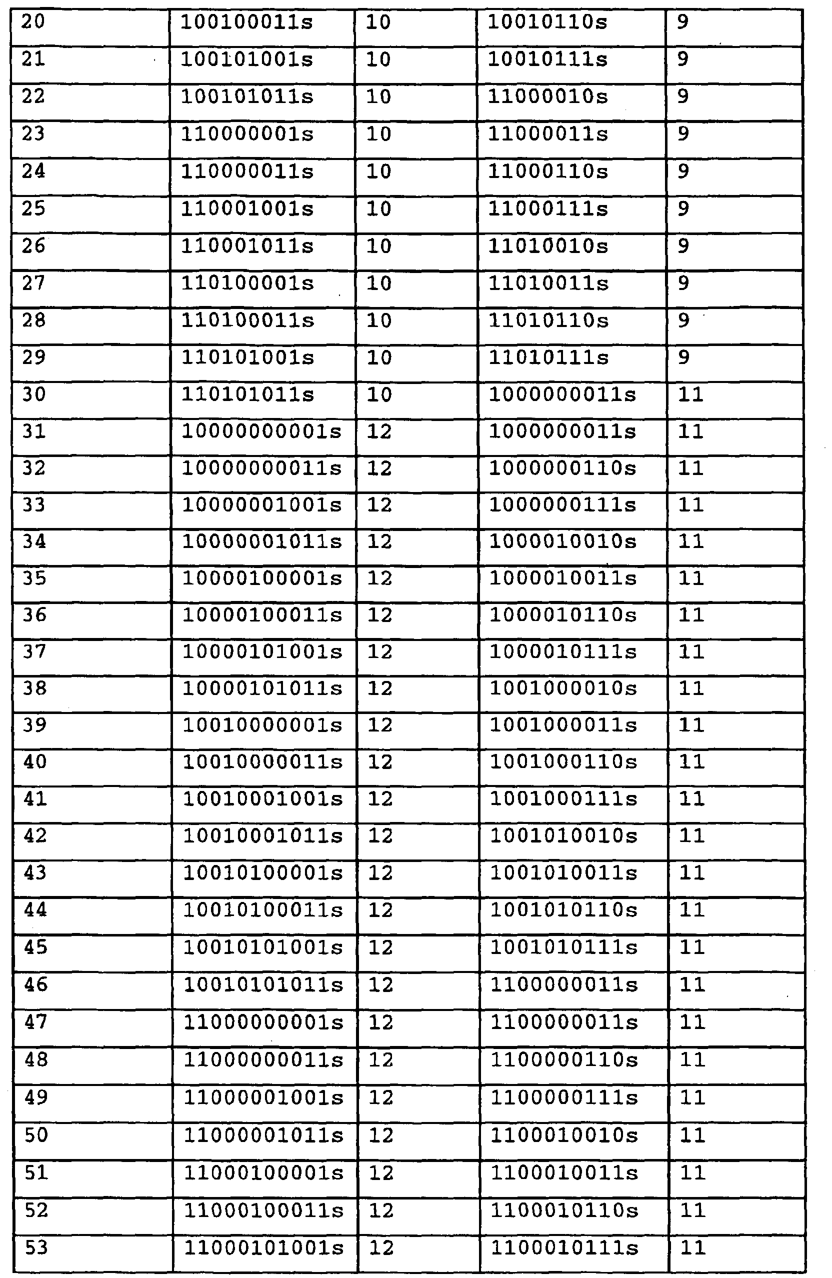

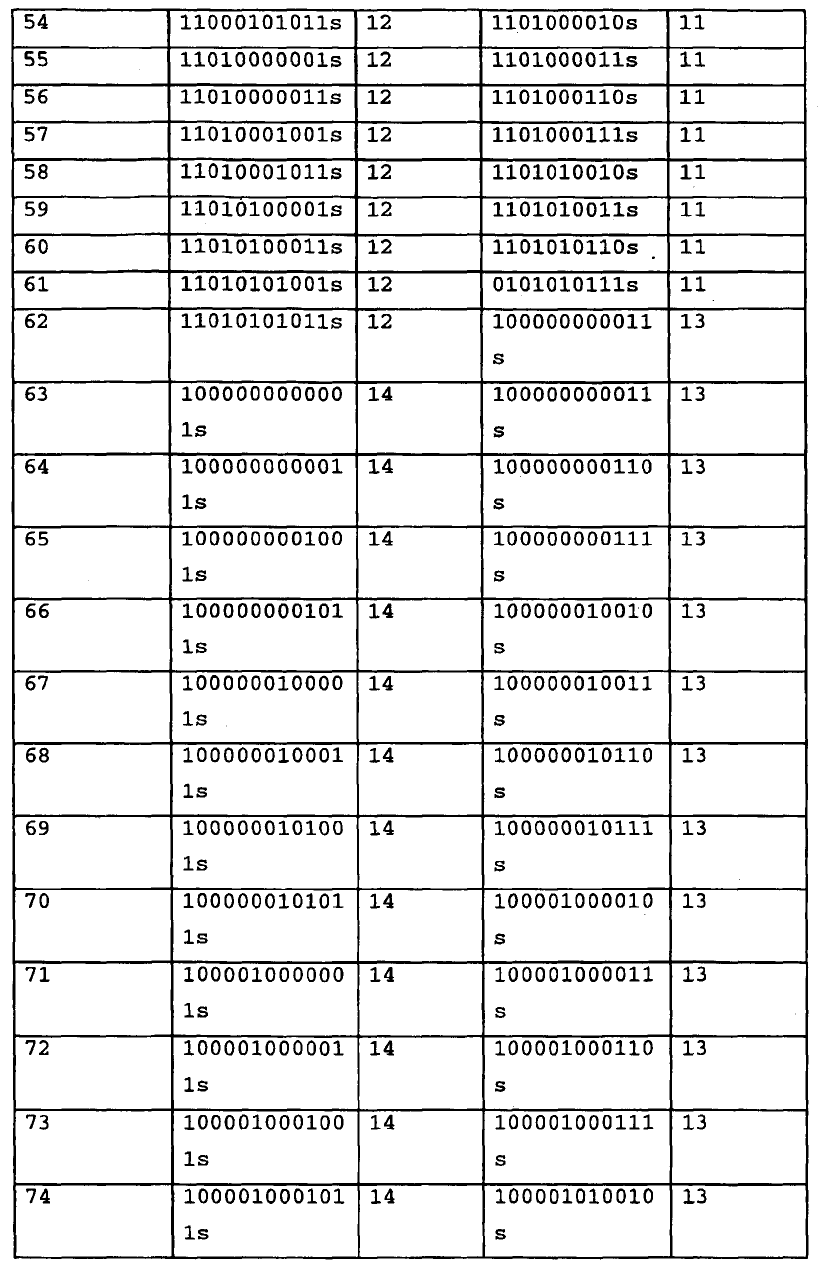

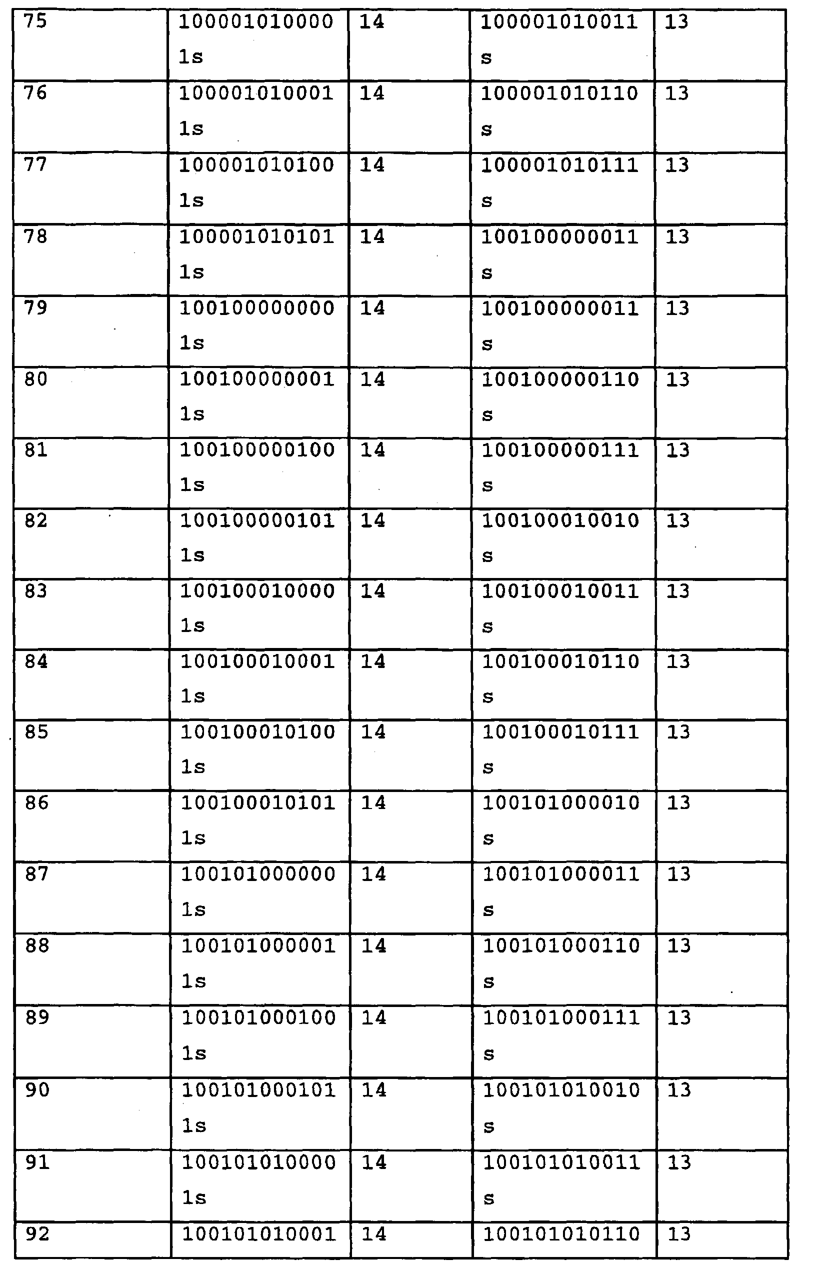

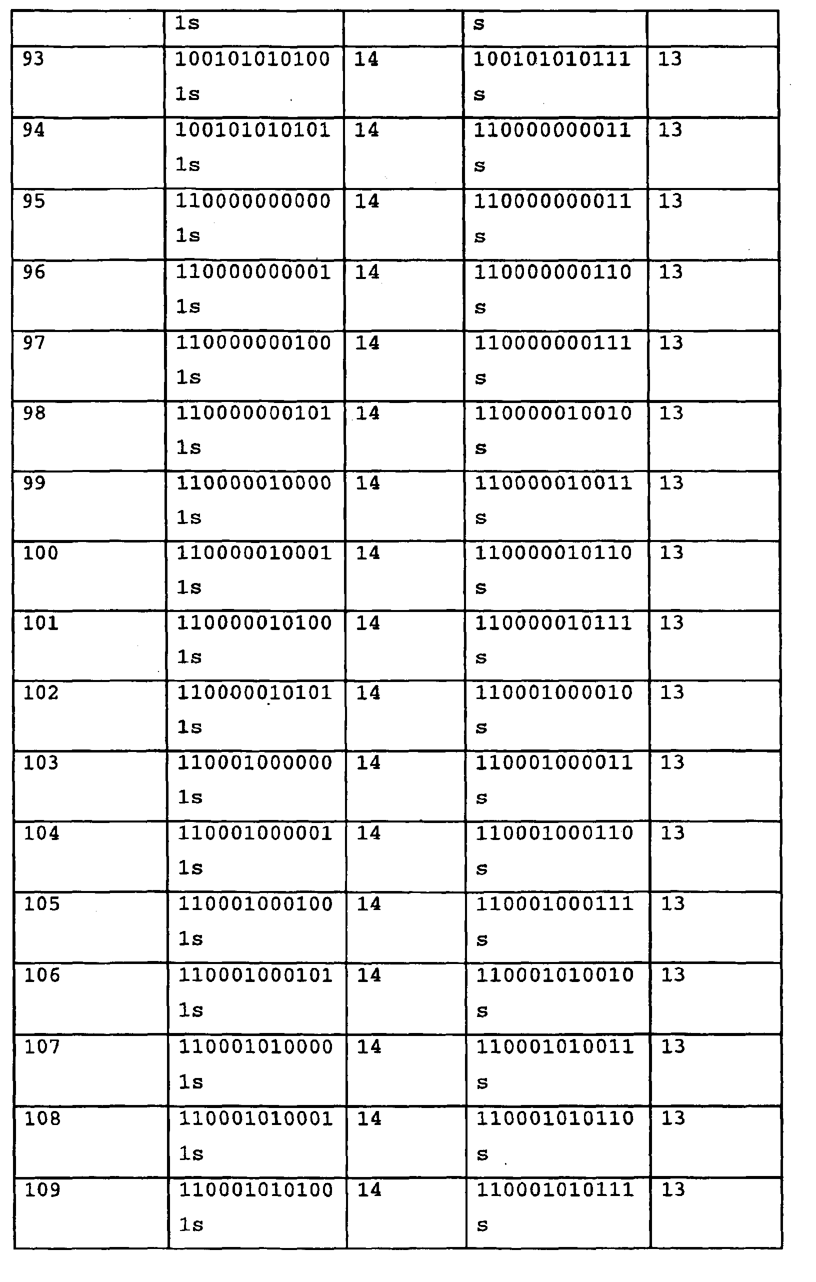

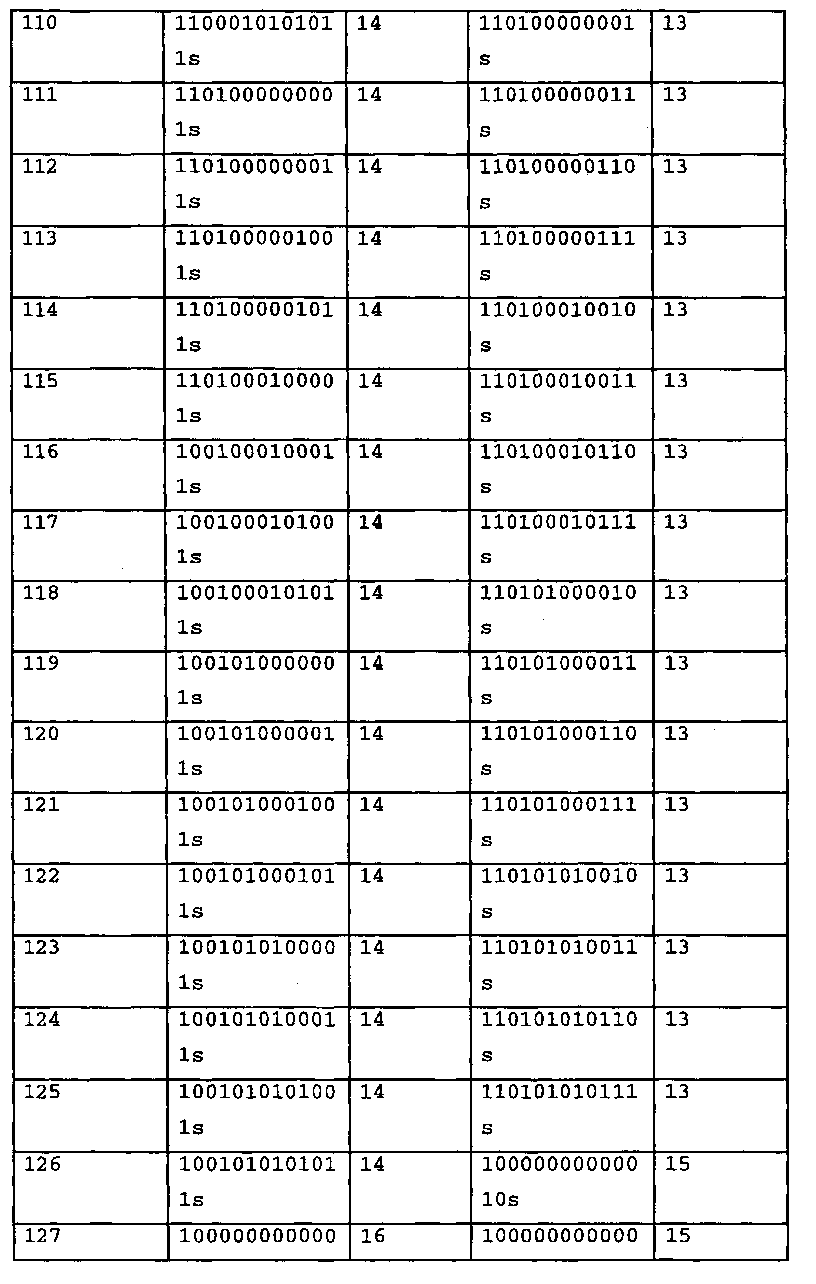

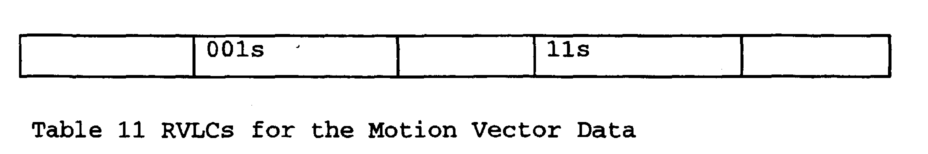

### Object based compression

The foregoing RVLCs and bitstream syntax also extends to object based compression by just including the object shape data in a field (typically preceding the motion data) and optionally with a Shape Resynchronization Word to separate shape data from motion data.

### Further preferred embodiments

A further preferred embodiment also uses reversible variable length codes with the more important motion vector data separated from the texture data plus adds a new syntax element which conveys the current status of motion vector predictor (called the motion vector predictor status). This is useful for the forward and backward decoding to verify if motion vectors are correctly decoded. The number of motion vector predictor status elements depends upon channel conditions: for high error rates more elements are used.

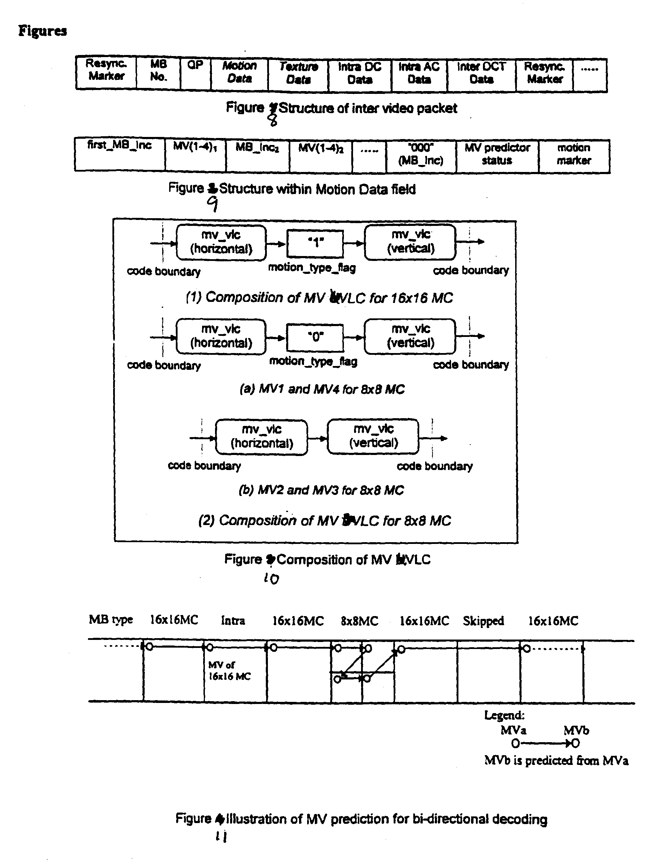

In particular, there are two types of video packets: intra video packets for I-VOPs and inter video packets for non-intra VOPs. Figure 8 shows the structure of the inter video packet in non-intra VOPs; note that coding of intra video packets can be the same as the MPEG-4 VM7.0. Packet headers are inserted into the compressed data at the beginning of each packet. The packet header consists of a unique 17-bit resynchronization marker ("Resync. Marker" in Figure 8 and which may be 0000 0000 0000 0000 1) followed by N bits indicating the current macroblock number ("MB No." where the number of macroblocks in the VOP is at most 2^{N}) and 5 bits for the quantization parameter ("QP"), and the header extension code. All syntax elements other than motion data and texture header may be the same as in VM7.0.

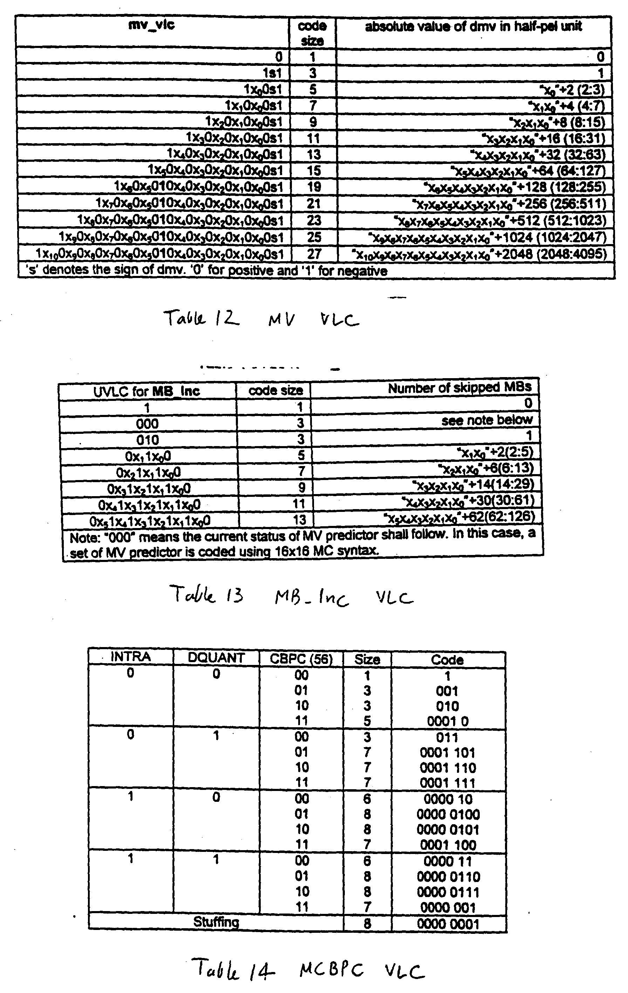

Figure 9 illustrates the structure of the motion data field, and Figure 10 shows the assembly of the variable length codes for the motion vectors with the "motion_type_flag" distinguishing the 16x16 macroblock motion compensation from the four 8x8 block motion compensation. In order to enable reversible decoding, the last macroblock in a video packet will not be coded as "skipped macroblock". Table 12 shows the mv_vlc coding. Originally, each mv_vlc is composed of two parts: coarse code and additional code. The coarse code appears in the even-numbered bits and is reversible such as "0", "11", "101", while the additional code is the sequence of odd-numbered bits. In this way, mv_vlc can be uniquely constituted. Besides, no matter which direction one decodes the VLCs, one can seek the code boundary by searching for the coarse code in even-numbered bits. In the preferred embodiment the coarse code is not only a marker enabling two-way decoding, but also a meaningful code which conveys rough information, i.e., range of the value to be expressed by the VLC. The syntax of motion vector coding is as follows: 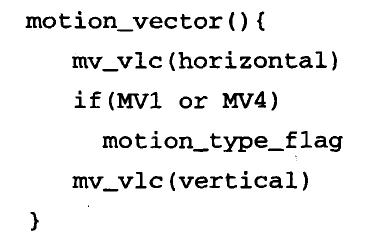 where mv_vlc(horizontal) and mv_vlc(vertical) are taken from Table 12 and may have from 1 to 27 bits and motion_type_flag is one bit as noted in Figure 10.

The syntax of the motion data is as follows: 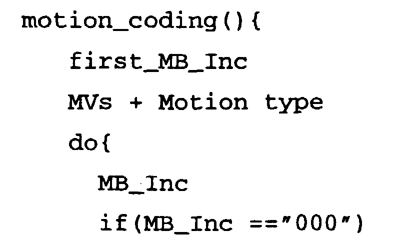 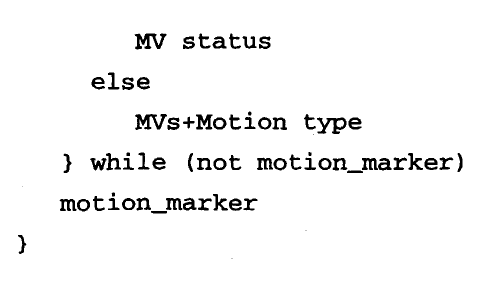 where first MB_Inc is actually NB_Inc+1, MVs_Motion type distinguishes between 16x16 motion compensation and four 8x8 motion compensation as in Figure 10, MB_Inc has 1 to 13 bits, and motion_marker is the 17 bits "1100 0000 0000 0000 1". MB_Inc replaces COD used in VM7.0. MB_Inc tells how many macroblocks are skipped, i.e., incremented, from the previously coded macroblock. Table 13 show the MB_Inc VLC codes. Note that the first MB_Inc in a packet (distinguished as "first_MB_Inc") tells which macroblock is coded first in a packet. The first_MB_Inc is also coded per Table 13, so its value means that actual increment plus one on the assumption that the previously coded macroblock corresponds to the one specified by macroblock_number field in the packet. (MB-No.).

One-dimensional motion prediction is employed in order to avoid error propagation. The "MV predictor status" represents the value of horizontal and vertical components of MV predictors. The MV predictor status is coded as 16x16 motion compensation mode using VLC signaled by the preceding MB_Inc="000". The value coded in the MV predictor of the macroblock immediately preceding the event, i.e., MB_Inc="000".

At least one MV status just before the motion_marker should be inserted to allow decoding in both directions and MV predictor status shall be put in as often as required to enhance the error robustness.

Figure 11 illustrates the rules for predictive coding of motion vectors: only one MV predictor for each horizontal and vertical component is used; MV predictor is not reset at the skipped macroblock; MV of 16x16 motion compensation is coded also for intra macroblock for error concealment purposes. This MV is used to obtain motion compensation signals when the texture data cannot be decoded. The motion vector difference MVD(0,0) is coded for this mode at the core experiments.

The syntax for macroblock_type (MB_type) is as follows: 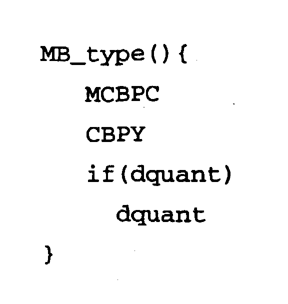 where MCBPC has 1 to 8 bits as in Table 14, CBPY has 2 to 6 bits as in VM7.0, and dquant has 2 bits as in VM7.0.

For decoding operations under the following error conditions, the decoder resynchronizes at the next resynchronization point, either resynch marker or common start code (i.e., 23-bit "0" + "1"), but the one encountered first in the bitstream:
(1) An illegal VLC is received.
(2) More than 64 DCT coefficients are decoded in a single block.
(3) Inconsistent header information (i.e., QP out of range, MB_number out of range, etc.) is received.
(4) The resynch marker or VOP start code is corrupted.
(5) No error is detected while decoding the macroblocks in the current packet, but the current running macroblock count maintained by the decoder does not match with NMB of the current packet header. (NMB indicates the number of macroblocks in a video packet and is calculated as the difference in the macroblock number (MB No.) between the current video packet and the next video packet).

If any subsequent packets are lost before resynchronization, those packets are replaced by skipped macroblocks. While an error is detected in the texture data section (and no errors are detected in the motion section) the NMB motion vectors are used to perform motion compensation. The texture part of all the macroblocks in that packet is discarded and the decoder resynchronizes to the next resync marker.

If no error is detected either in the motion or in the texture sections of the bitstream, but the resynchronization marker is not found after decoding all the macroblocks of the current packet, an error is flagged and only the texture part of all the macroblocks in the current packet is discarded. Motion compensation is still applied for the NMB macroblocks in that case.

Let MBA[k] denote the number of the first macroblock in the current packet, and MBA[k+1] denote the number of the first macroblock in the next packet. An additional check can be performed when, no error is detected in either the motion or the texture parts of the packet and the next resynchronization marker is correctly found. In this case check if MBA[k+1]-MBA[k] is equal to NMB. If not, discard the data in the next video packet (packet corresponding to MBA[k+1]).

As for the conventional data partitioning, when an error is detected in the motion data section, the decoder discards entire packet and resynchronizes to the next successfully read resync marker or VOP start code. Whilst the decoder of the proposed method conducts MV recovery as described in the following section and do motion compensation suing recovered MVs.

An example will illustrate the process; thus presume a sequence of motion data is

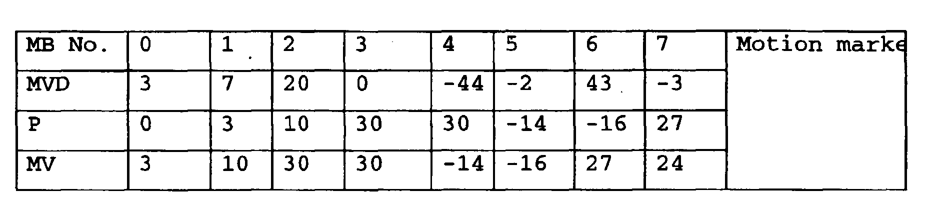

where for simplicity only the horizontal component of the MVs are dealt with and no MB_Inc is considered. There are seven motion vectors actually coded in this motion data field and these are represented in terms of motion vector difference (MVD), motion vector predictor (P) and actual motion vector (MV). The final MV value (i.e., MV[7] = 24 in the example) is supposed to be stored as MV predictor status. This information is used in backward decoding similarly as in the forward decoding that is, 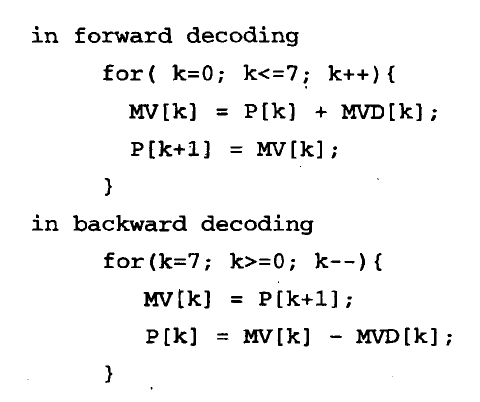 In the above MVDs are obtained from the bitstream. MVDs and P[0] which is assumed to be 0 at the beginning of a packet can reconstruct MVs in forward decoding, while MV[], which should be embedded as predictor status, and MVDs can also restore the MVs in backward decoding. Thus the MVs can be correctly decoded in both directions. Now assuming that a bit error has occurred at MB No.1 so that MVD data "1101001" is changed to "1101011". The decoder translates these erroneous bits into MVD[1]=-7. Then, MVs obtained at the decoder are as follows:

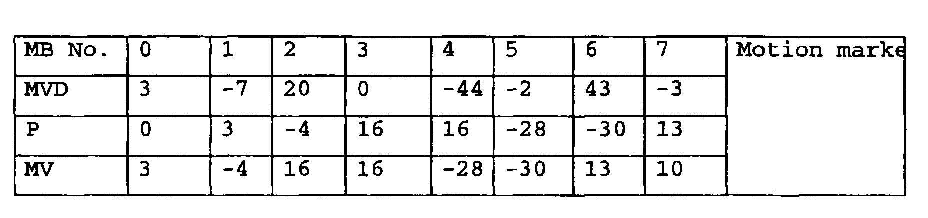

It should be noted that by a single bit error 7 out of 8 MVs are spoiled and that the error has not been detected yet. This example well illustrates it is very likely that erroneous bits are interpreted as a wrong VLC code word. Thus, errors can well propagate without being detected, in VLC coding context.

By the preferred embodiment these MVs are coded as follows. The single entry columns denotes MV predictor status.

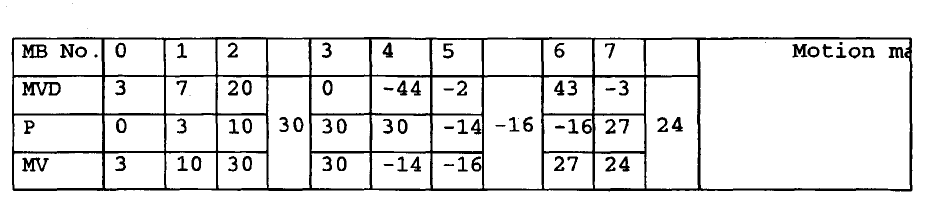

The decoder consistent with the preferred embodiment works in three steps: error detection, resynchronization, error recovery and error concealment. These steps are depicted one by one assuming a bit error takes place at the same location as in above example as follows.

Step 1. Errors can be detected when the MV predictor in actual decoding differs from MV predictor status. In this example, the MV predictor in actual decoding is 16 while MV predictor status represents 30. Note that errors can also be detected when an illegal VLC codeword is encountered.

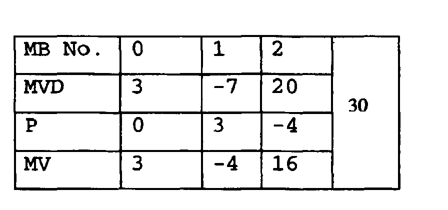

Step 2. Once an error has been detected the decoder seeks resynchronization point by searching for a motion marker.

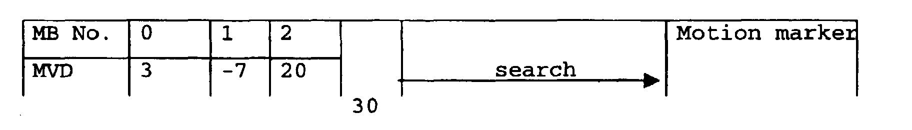

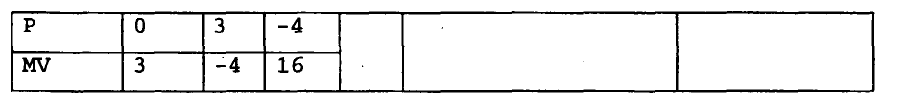

Step 3. The backward decoding commences at MV predictor status immediately preceding motion marker. This process last until one of the two events occurs; (1) MV predictor status differs from MV predictor in backward decoding (2) the process reaches the MB where an error has been detected. (This MV shall not be processed.) When the backward decoding terminates, the data which has been recovered are restored as correct information.

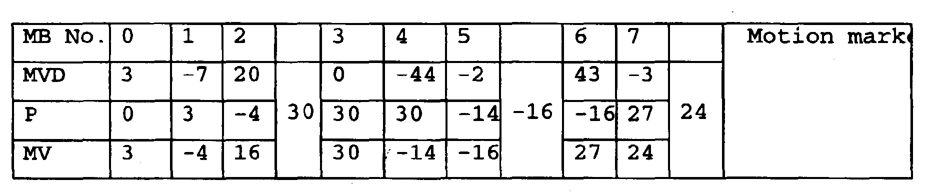

Step 4. The data which has not be confirmed by MV predictor status in the forward decoding should be decontaminated. In this particular implementation, those MVs are reset to 0. Note this process may be optimized based on further investigation.

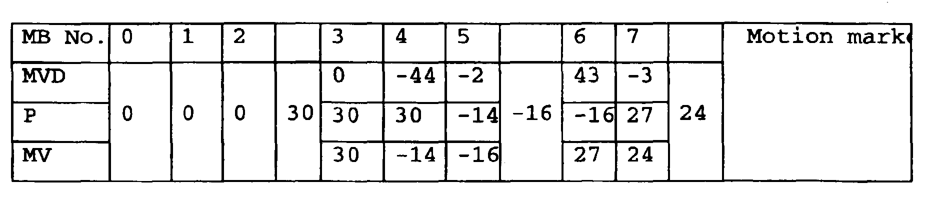

The texture data which follows the motion data should be dealt with accordingly. The prediction error signals corresponding to the MBs processed by error concealment shall be discarded. However, if a MB is intra coded and is correctly decoded, the MB is represented as intra MB even if the motion data for that MB is successfully restored.

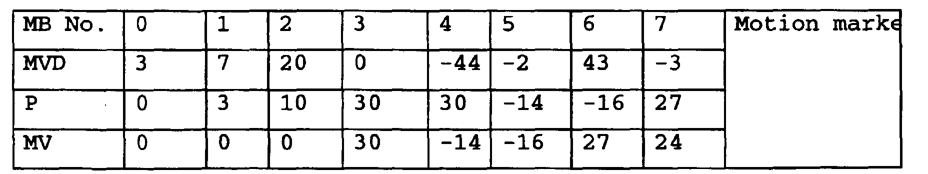

## Claims

1. Motion compensated video of the type with packets including macroblock motion vectors and texture data, comprising:
motion vectors encoded with codewords including a reversible coarse code plus interleaved additional code bits.

2. The video of claim 1, wherein:
the motion vector components are differentially encoded with a predictor the preceding motion vector components.

3. The video of claim 2, wherein:
the motion vector component codewords are as listed in table 12.

4. The video of any of claims 1 to 3, wherein:
the coarse code indicates a range of values; and
the additional bits indicate a value with the range of values.

5. A decoder for motion compensated video of the type with packets including macroblock motion vectors and texture data, comprising:
a decoder operative to detect motion vectors encoded with codewords including a reversible coarse code plus interleaved additional code bits.

6. An encoder for motion compensated video of the type with packets including macroblock motion vectors and texture data, comprising:
an encoder operative to encode motion vectors with codewords including a reversible coarse code plus interleaved additional code bits.

7. A method of motion compensating video of the type with packets including macroblock motion vectors and texture data, comprising:
encoding motion vectors with codewords including a reversible coarse code plus interleaved additional code bits.

8. The method of Claim 7 further comprising:
detecting motion vectors encoded with codewords including a
reversible coarse code plus interleaved additional code bits.

9. The method of claim 7 or claim 8, further comprising:
differentially encoding motion vector components with a predictor.

10. The method of claim 9, wherein the step of differentially encoding motion vector components comprises:
differentially encoding motion vector component with codewords listed in table 12.
